(19) Europäisches Patentamt
European Patent Office
Office européen des brevets

(11) **EP 3 402 063 A1**

(12) **EUROPÄISCHE PATENTANMELDUNG**

(43) Veröffentlichungstag:
**14.11.2018 Patentblatt 2018/46**

(21) Anmeldenummer: **18000534.0**

(22) Anmeldetag: **18.01.2014**

(51) Int Cl.:
*H02M 7/525* (2006.01)    *H02J 5/00* (2016.01)
*H02M 1/36* (2007.01)    *H04B 5/00* (2006.01)
*H02M 7/48* (2007.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2013 DE 102013002321**

(62) Dokumentnummer(n) der früheren Anmeldung(en) nach Art. 76 EPÜ:
**14000189.2 / 2 765 701**

(71) Anmelder: **Rehm, Markus**
**78052 Villingen-Schwenningen (DE)**

(72) Erfinder: **Rehm, Markus**
**78052 Villingen-Schwenningen (DE)**

Bemerkungen:
Diese Anmeldung ist am 18-06-2018 als Teilanmeldung zu der unter INID-Code 62 erwähnten Anmeldung eingereicht worden.

(54) **DRAHTLOSE RESONANZGEKOPPELTE ELEKTRISCHE ENERGIEÜBERTRAGUNG**

(57)    In einem ersten Aspekt der aktuellen Erfindung wird eine Quelleneinheit und/oder eine Lasteinheit für drahtlose Leistungsübertragung vorgeschlagen, welche unter wesentlicher Beibehaltung von Resonanzkopplungsbedingung (Resonanzfrequenz des Quellenresonanzkreises ist im Wesentlichen gleich der Resonanzfrequenz des Lastresonanzkreises) eine Kopplungsbedingung der drahtlosen Leistungsübertragungstrecke in der Quelleneinheit und/oder der Lasteinheit detektiert.

In einem weiteren Aspekt der aktuellen Erfindung wird eine Quelleneinheit und/oder eine Lasteinheit für drahtlose Leistungsübertragung vorgeschlagen, welche unter wesentlicher Beibehaltung von Resonanzkopplungsbedingung (Resonanzfrequenz des Quellenresonanzkreises ist im Wesentlichen gleich der Resonanzfrequenz des Lastresonanzkreises) den Betriebszustand der Quelleneinheit und/oder der Lasteinheit so steuert, dass sich im Wesentlichen höchstens kritische Kopplungsbedingungen einstellt.

Fig. 3

EP 3 402 063 A1

Printed by Jouve, 75001 PARIS (FR)

**Beschreibung**

Technisches Gebiet der Erfindung

Die aktuelle Erfindung bezieht sich auf die drahtlose elektrische Energieübertragung mittels induktiv oder kapazitiv gekoppelter Resonanzkreise. Des Weiteren bezieht sich die aktuelle Erfindung auf die Steuerung der Resonanzfrequenz, auf die Steuerung der zu übertragenden Leistung und die elektrische Steuerung der Kopplung von gekoppelten Resonanzkreisen.

Hintergrund der Erfindung

Drahtlose Energieversorgung von Geräten kann mittels induktiver- und / oder kapazitiver Nahfeldkopplung realisiert werden. Dies wird in vielen RFID Systemen und drahtlosen Batterieladegeräten eingesetzt. Dabei erzeugt eine Quelleneinheit ein elektromagnetisches Wechselfeld. Dieses elektromagnetische Wechselfeld wird über gekoppelte Spulen (induktive Kopplung) oder über einen offenen Kondensator (kapazitive Kopplung) an den Verbraucher, im Folgenden als Lasteinheit bezeichnet, gekoppelt.

Mit zunehmendem Abstand von Quelleneinheit zu Lasteinheit verringert sich der Kopplungsgrad und vermindert den an der Lasteinheit empfangbaren Leistungsanteil. Im Fall von einem offenen Kondensator minimiert sich dabei die Kopplungskapazität und im Fall von gekoppelten Spulen vergrößert sich die Streuinduktivität. Es ist bekannt, dass sich dieser Effekt kompensieren lässt, indem man die Streuinduktivität mit Kondensatoren kompensiert bzw. den Koppelkondensator mit Induktivitäten kompensiert. Dadurch entstehen mindestens ein Schwingkreis auf der Quellen- bzw. Lasteinheitseite der Energieübertragungsstrecke. Diese Schwingkreise kompensieren die Streuinduktivität bzw. Koppelkapazität, sofern die Schwingkreise exakt gleich abgestimmt sind und die Quelleneinheit die Energieübertragungsstrecke bei dieser Resonanzfrequenz betreibt. Solche gekoppelte Schwingkreise bilden die Grundlage von Bandfiltern und sind seit vielen Jahren zur Kopplung von Verstärkerstufen usw. eingesetzt.

In "System Description Wireless Power Transfer" des "Wireless Power Consortiums (WPC)" ist ein Schwingkreis gezeigt, der von einem Generator getrieben wird. Hier wird über ein zuschaltbares Netzwerk eine Mehrzahl von Teilinduktivitäten an den Resonanzkreis zugeschaltet, um die abgestrahlte Feldenergie auf die Fläche zu konzentrieren, auf der Lasteinheiten positioniert sind. Weiter wird mit einem vorgeschalteten Spannungs- oder Stromregler die Speisung gesteuert.

Der generelle Nachteil von drahtlosen Speisungsprinzipien, welche Resonanzkreise in der Quellen- und/ oder in der Lasteinheit verwenden, ist die Resonanzfrequenzverstimmung aufgrund von Komponententoleranzen, Komponentenalterung, Kopplung und Lastentnahme. Diese Lastverstimmung ist insofern unerwünscht, weil die Impedanz des Resonanzkreises frequenzselektiv wirkt und eine vorgegebene Betriebsfrequenz nicht mehr mit der Resonanzfrequenz übereinstimmt. Das bedeutet, die Energieübertragungsstrecke besteht nicht länger nur aus einem reellen Lastwiderstand, sondern weist auch einen induktiven oder kapazitiven Anteil auf. Folglich ergibt sich Blindleistung, welche die Verlustleistung erhöht. Dies senkt den Gesamtwirkungsgrad der Quelleneinheit (Resonanzkreis Treiberschaltung usw.) und somit der gesamten Leistungsübertragungsstrecke.

Zusätzlich erhöhen sich die Verzerrungen, weil die Treiberschaltungen mehr Oberwellen erzeugen. Die bekannte Netzwerk-Messmethode misst zwar in einem Intervall die Resonanzfrequenz des Netzwerks und betreibt es anschließend bei dieser Frequenz, hat aber keine Möglichkeit die Netzwerk- oder Resonanzfrequenz aktiv zu steuern. Dies wäre jedoch sehr wünschenswert, da in Richtlinien wie EN300330, REC7003 und ITU-RSM2123 Frequenzbereiche (z. B. 119...135kHz) und deren maximale Amplitudenwerte bestimmt sind.

Weiter existieren länderspezifische schmale Frequenzbereiche innerhalb eines Frequenzbandes, die viel kleinere Grenzwerte verlangen. Es ist daher wichtig, neben der Leistung auch die spektrale Position der abgestrahlten Leistung zu steuern.

Ein weiteres Problem betrifft das variable Produkt aus Kopplung (k) und der Güte (Q) in der weiteren Beschreibung wird dies als Energiekopplung (k·Q) bezeichnet. Die Güte Q ist ein Maß der im System gespeicherten Energie bzw. im Resonanzkreis zirkulierenden Blindleistung und der vom System abgegebenen Energie bzw. Wirkleistung im Resonanzkreis. Die Kopplung (k) wird im Wesentlichen durch die Geometrie der drahtlosen Kopplungstrecke (Fläche, Abstand), derer winkeligen Ausrichtung und durch das Kopplungsmedium bestimmt. Ändert sich der Lastwiderstand in einem Resonanzkreis, ändert sich gleichzeitig die Energiekopplung (k·Q). Das System ist mehr oder weniger bedämpft und die Energiekopplung (k·Q) ist dementsprechend kleiner oder größer. Eine gewünschte konstante Ausgangsspannung bzw. ein gewünschter konstanter Ausgangstrom der Lasteinheit bedingt deshalb einer Regelung dieser Größen, welche auf der Lasteinheitseite und oder mittels Daten-Lastmodulation in der Quelleneinheit erfolgen kann.

In "A Frequency Control Method for Regulating Wireless Power to Implantable Devices" wird die Ausgangsspannungsregelung über die Frequenzverstimmung in der Quelleneinheit vorgeschlagen. Das Problem dieser Lösung ist die Verstimmung der Resonanzfrequenz, welche andere angekoppelte Lasteinheiten gleichzeitig in der Leistung regelt, falls mehrere Lasteinheiten zur Quelleneinheit gekoppelt sind. Eine unabhängige Regelung ist nicht möglich. Falls die Verstimmung auf der Lasteinheitsseite erfolgt, sind zwar mehrere Lasteinheiten unabhängig regelbar, aber die reelle Lastwiderstandskopplung zwischen Quelleneinheit und Lasteinheit ist in beiden Varianten nicht mehr gegeben. Die Energieübertragung erfolgt nicht mehr mit gekoppelten Resonanzkreisen und das Gesamtnetzwerk arbeitet nicht mehr im reellen Bereich (Resonanzfall). Dies bewirkt höhere Verluste in der Quelleneinheit und / oder in der Lasteinheit.

In "Wireless Power Supply for Implantable Biomedical Device Based on Primary Input Voltage Regulation" wird die Ausgangsspannung der Lasteinheit digitalisiert und an die Quelleneinheit übertragen. Die Betriebsspannung der Quelleneinheit wird, basierend auf den empfangenen Daten der Lasteinheit, geregelt. Diesen Ansatz verfolgt auch das "Wireless Power Consortium (WPC)" in ihrem Standard, der drahtlose Leistungsübertragung bis 5 Watt spezifiziert. Dieser Ansatz ist effizient, weil nur so viel Leistung übertragen wird wie benötigt. Leider wird Resonanzverstimmung nicht berücksichtigt.

Ein weiteres Grundproblem bleibt bei allen bekannten Systemen unberücksichtigt und betrifft den Energiekopplungsgrenzwert ($k \cdot Q = 1$), bei welchem die maximal mögliche Leistung ohne wesentliche Frequenzverstimmung oder ohne wesentliche Erhöhung der Bandbreite übertragen werden kann. Dieser Grenzfall ist besonders wichtig, weil ein kleiner Kopplungsfaktor (k) mit vergrößerter Güte (Q) kompensiert werden kann. Damit bleibt die Energiekopplung ($k \cdot Q$) unverändert. So kann z. B. die Reichweite erhöht werden.

In der Praxis ergibt sich aber oft eine dynamische Kopplung (zeitlich variierende Kopplung (k)) und / oder eine dynamische Last. Beispiele hierfür sind unterschiedliche drahtlose Übertragungsstrecken mit dynamischer Kopplung durch sich ändernde Geometrien, und / oder sich änderndem Abstand zwischen Quelleneinheit und Lasteinheit, und / oder sich ändernden Kopplungsmedien und vor allem durch Änderungen im Lastwiderstand.

Es ist ein wesentlicher Wunsch, ein möglichst universelles drahtloses Energieübertragungssystem zu entwerfen, welches sich einer drahtgebundenen Verbindung möglichst gut annähert. Dies hätte automatisch einen bestmöglichen Wirkungsgrad und größte Flexibilität zur Folge.

Es ist weiter wünschenswert, dass die Energieübertragungsreichweite bei vorgegebener Quelleneinheit beim Entwurf einer beliebigen Lasteinheit optimiert werden kann, ohne dass die Quelleneinheit in ihrer Abstrahlungseinheit (Spulen und Kondensatoren) geändert werden muss. Eine Lasteinheit kann z. B. mit kleiner Kopplung (kleine Kopplungsfläche usw.) die Reichweite mit größerer Güte kompensieren. Somit wären für die Quellen- und Lasteinheit nur wenige Vorgaben zu spezifizieren, was in einer offenen Standardisierung wünschenswert ist.

Zusätzlich sollten mehrere Lasteinheiten im Betrieb beliebig, auch unter sich ändernden Kopplungbedingungen (wechselnde Kopplungsfaktoren (k) und / oder wechselnde Güten (Q)) parallel betrieben werden können.

Weiter sollte es möglich sein die Übertragungsfrequenz vorzugeben, da es vom Gesetzgeber Abstrahlungsgrenzwerte (Amplitude und Frequenz) gibt, wie z. B. EN300330, REC7003 und ITU-RSM2123.

Weiter sollte es möglich sein, die Übertragungsfrequenz zu verändern, um die spektrale Spitzenleistung zu verkleinern.

Die nachfolgende Erfindung beschreibt Verfahren und deren Detailimplementationen, welche die erwähnten Anforderungen erfüllt. Die in der nachfolgenden Erfindung beschriebenen Verfahren und deren Detailimplementationen zeichnen sich mit kostengünstigen Implementationen, stabilem Betrieb und hohem Wirkungsgrad aus.

## Kurzbeschreibung der Zeichnungen

Figuren 1a... 1g zeigen vereinfachte Ersatzschaltbilder und ihre Übertragungseigenschaften als drahtlose Energieübertragungsstrecken im Nahfeld mittels gekoppelter Resonanzkreise.

Figur 2 zeigt das Blockschaltbild einer resonanzgekoppelten Energieübertragung gemäss einem ersten Ausführungsbeispiel der aktuellen Erfindung.

Figur 3 zeigt das Blockschaltbild einer resonanzgekoppelten Energieübertragung gemäss einem zweiten Ausführungsbeispiel der aktuellen Erfindung.

Figur 4 zeigt Signalkurven von Ausgangssignalen der Kopplungsdetektoren gemäss den Figuren 2 und 3.

Figur 5 zeigt ein universelles Ausführungsbeispiel einer Kopplungsinduktivität im Einsatz mit 2 Hauptanwendungen gemäss der aktuellen Erfindung.

Figuren 6a und 6b zeigen Signalkurven und ein Blockschaltbild zur Kommunikationssteuerung gemäss den Figuren 2 und 3.

Figur 7 zeigt eine Paketstruktur oder Kommunikationsprotokoll gemäss den Figuren 2 und 3.

Figur 8 zeigt eine Detailschaltung gemäss der aktuellen Erfindung.

Figuren 9a und 9b zeigen Signalkurven gemäss der Figur 8.

Figur 10 zeigt eine weitere Detailschaltung gemäss der aktuellen Erfindung.

## Detaillierte Beschreibung der Erfindung

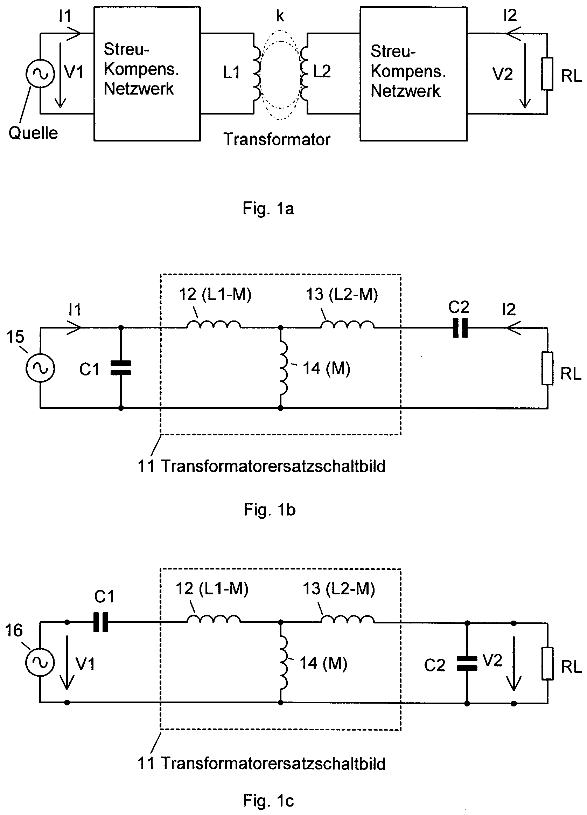

Figur 1a zeigt eine drahtlose Energieübertragungsstrecke. Eine Quelle koppelt Energie über die gekoppelte Spulen L1 und L2 zu einer Last RL. Ein Streukompensationsnetzwerk ist auf der Quellen- und Lastseite implementiert um die Streuinduktivitäten zu kompensieren.

Figur 1b zeigt die drahtlose Übertragungsstrecke gemäss Figur 1a mit einem vereinfachten Transformatorersatzschaltbild 11 und den Kondensatoren C1 und C2 als Streukompensation. C1 und C2 bilden zusammen mit den Primär- und Sekundärinduktivitäten L1 und L2 die gekoppelten Resonanzkreise mit im Wesentlichen gleichen Resonanzfrequenzen. C1 ist mit L1 auf eine Primärresonanzfrequenz abgestimmt. C2 ist mit L2 auf eine Sekundärresonanzfrequenz abgestimmt. Ein Parallelschwingreis, gebildet aus C1 und L1 auf der Primärseite, und ein Serieschwingkreis, gebildet aus C2 und L2 auf der Sekundärseite, koppeln eine Stromquelle I1 mit einem Lastwiderstand RL. Die Längsinduktivitäten 12 mit dem Wert L1-M, 13 mit dem Wert L2-M und eine Hauptinduktivität 14 mit dem Wert M entsprechen den gekoppelten Spulen. Die Größen M, Kopplung k, Primärinduktivität L1 und Sekundärinduktivität L2 sind über die

Abhängigkeit $M = k \cdot \sqrt{L1 \cdot L2}$ miteinander ver-knüpft. Die Sekundärgüte (Qs) bestimmt sich zu

$$Qs = \frac{\omega \cdot L2}{RL},$$ wobei ω die Kreisfrequenz darstellt. Je kleiner RL ist, desto größer ist Qs.

Figur 1c zeigt die drahtlose Übertragungsstrecke gemäss Figur 1a mit einem vereinfachten Transformatorersatzschaltbild 11 und den Kondensatoren C1 und C2 als Streukompensation. C1 und C2 bilden zusammen mit den Primär- und Sekundärinduktivitäten L1 und L2 die gekoppelten Resonanzkreise mit im Wesentlichen gleichen Resonanzfrequenzen. C1 ist mit L1 auf eine Primärresonanzfrequenz abgestimmt. C2 ist mit L2 auf eine Sekundärresonanzfrequenz abgestimmt. Ein Serieschwingkreis, gebildet aus C1 und L1 auf der Primärseite, und ein Parallelschwingkreis, gebildet aus C2 und L2 auf der Sekundärseite, koppeln eine Spannungsquelle V1 mit einem Lastwiderstand RL. Die Größe M bestimmt sich gleich wie in Figur 1b. Die Sekundärgüte (Qs) bestimmt sich zu Qs = RL·ω·C2. Je größer RL ist, desto größer ist Qs.

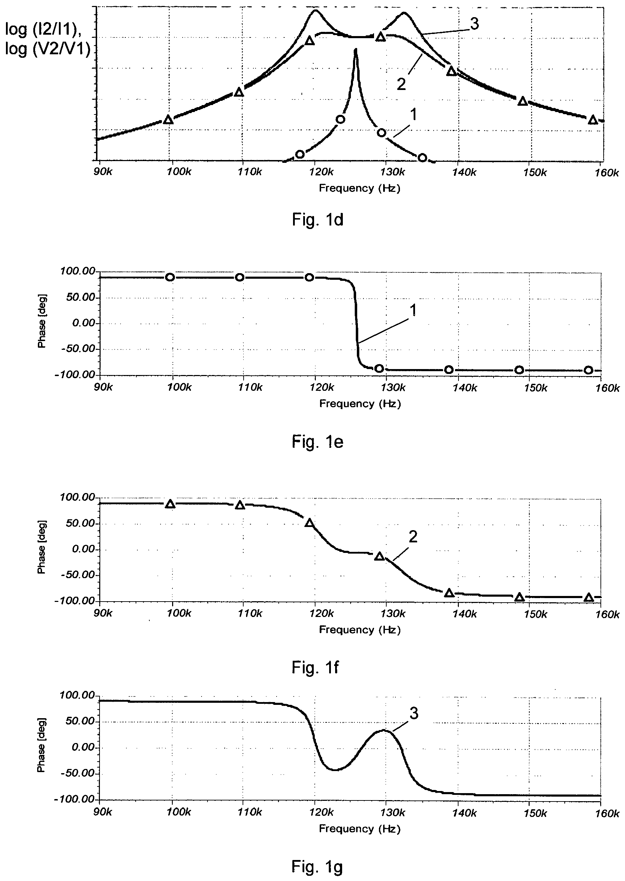

Die Übertragungseigenschaften der Ersatzschaltungen von Figur 1b und 1c sind identisch, sie unterscheiden sich nur in ihren Resonanzschaltungen. Diese Resonanzschaltungen können auch beliebig kombiniert werden. So können Quelleneinheitskreis und Lastresonanzkreis die gleiche Topologie aufweisen und lassen sich auf die beschriebene Erfindung anwenden als weitere Ausführungsbeispiele. Die Betragsübertragungsfunktion von I2 gegenüber I1 gemäß Figur 1b bzw. V2 gegenüber V1 gemäß Figur 1c zeigt Figur 1d. Den Phasengang der Eingangsimpedanz bzw. die Eingangsadmittanz der Übertragungsstrecke zeigen die Figuren 1e ... 1g.

Kurve 1 zeigt die Übertragungseigenschaften für Energiekopplung (k·Q) kleiner als eins. Die Betrags-übertragungsfunktion erreicht einen kleinen Maximal-wert und die Phasenfunktion hat einen kontinuierlichen Verlauf während dem Phasenwechsel von +90 nach -90 Grad (siehe Figuren 1d und 1e). Dieser Verlauf wird unterkritisch gekoppelt genannt.

Kurve 2 zeigt die Übertragungseigenschaften für Energiekopplung (k·Q) ungefähr gleich eins. Die Be-tragsübertragungsfunktion erreicht den Maximalwert oh-ne Einsattelung und die Phasenfunktion hat einen kontinuierlichen Verlauf mit einem flachen Bereich (ohne Änderung des Steigungsvorzeichens) innerhalb dem Phasenwechsel von +90 nach -90 Grad (siehe Figuren 1d und 1f). Dieser Verlauf wird kritisch gekoppelt genannt und bestimmt den Energiekopplungsextremalwert.

Kurve 3 zeigt die Übertragungseigenschaften für Energiekopplung (k·Q) größer als eins. Die Betragsübertragungsfunktion erreicht zwei Maximalwerte und die Phasenfunktion erfährt ein Vorzeichenwechsel im Steigungsverlauf innerhalb einem Phasenwechsel von +90 nach -90 Grad (siehe Figuren 1d und 1g). Dieser Verlauf wird überkritisch gekoppelt genannt und wird gemäß einem ersten Aspekt der Erfindung mindestens weitgehend in der Energieübertragung vermieden. Es ist leicht zu erkennen, dass die Topologie gemäß Figur 1b die Energiekopplung (k·Q) vergrößert, wenn sich RL verkleinert. Dies entspricht einer Lastzunahme, welche auf eine Spannungsquelle wirkt.

Die Lastauskopplung mittels Serieschwingkreis in der Lasteinheit ist somit für Spannungsquellenbetrieb geeignet (gewünschte konstante Ausgangsspannung auf der Lastseite erfordert niederohmige Quelle). Tatsächlich koppelt sich eine größere Last (kleinerer RL) durch die größere Energiekopplung stärker an die Quelleneinheit. Ähnliches gilt für Figur 1c. Hier vergrößert sich die Energiekopplung (k·Q) wenn sich RL vergrößert. Dies entspricht einer Lastzunahme, welche auf eine Stromquelle wirkt.

Die Lastauskopplung mittels Parallelschwingkreis in der Lasteinheit ist somit für Stromquellenbetrieb geeignet (gewünschter konstanter Ausgangsstrom auf der Lastseite erfordert hochohmige Quelle). Tatsächlich koppelt sich eine größere Last (größerer RL) durch die größere Energiekopplung stärker an die Quelleneinheit. Die Quelleneinheit auf der Primärseite sieht einen trans-formierten Lastwiderstand, welcher das Resonanznetz-werk bedämpft, egal in welcher Schwingkreistopologie die Quelleneinheit und die Lasteinheit arbeiten. Die daraus resultierende Gesamtgüte (Qtot) der drahtlosen Übertragungsstrecke bestimmt den Wirkungsgrad und die Frequenzselektion der Quelleneinheit. Ein hohes Qtot bedeutet eine hohe Frequenzselektion, große Blindleistung gegenüber Wirkleistung und deshalb einen eher niedrigeren Wirkungsgrad. Ein tiefes Qtot bedeutet eine niedrige Frequenzselektion, eine kleine Blindleistung gegenüber Wirkleistung und desshalb einen eher höheren Wirkungsgrad.

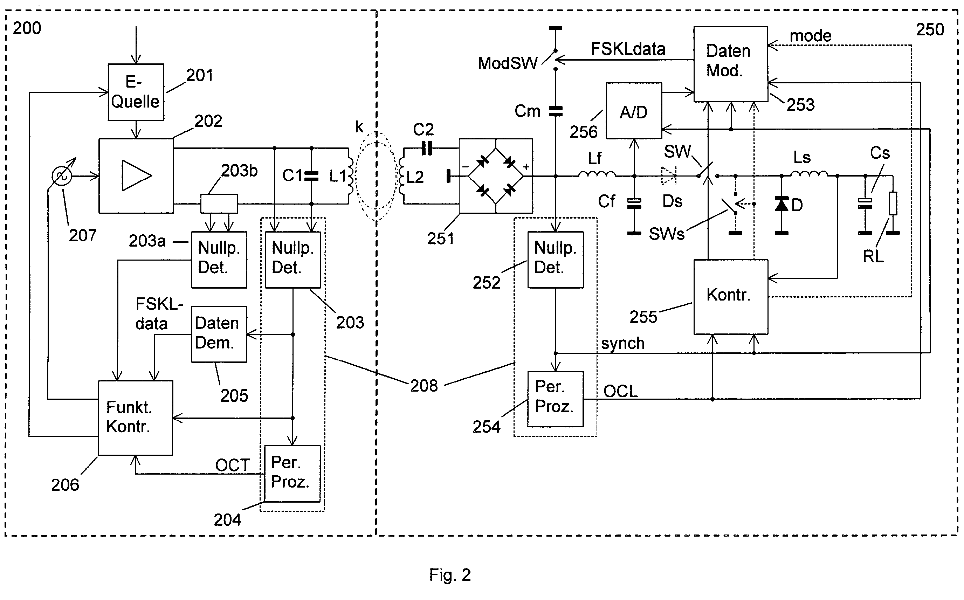

Figur 2 zeigt ein Blockschaltbild von Quelleneinheit 200 und Lasteinheit 250 gemäß einem ersten Ausführungsbeispiel der aktuellen Erfindung. Eine Leistungsquelle 201 speist einen Verstärker 202. 202 treibt einen Parallelschwingkreis mit L1 und C1. L1 bildet die Primärspule der drahtlosen Übertragungsstrecke. Ein Nullpunkt- oder Vorzeichendetektor 203 generiert ein Ausgangssignal, welches den Nulldurchgang der Resonanzspannung anzeigt. Ein Nullpunkt- oder Vorzeichendetektor 203a generiert von einem Stromsensor 203b ein Ausgangssignal, welches den Nulldurchgang des Resönanzstromes anzeigt. 203 und 203a sind im Wesentlichen identisch. Das Ausgangssignal von 203a wird einem Funktionskontroller 206 zugeführt. Ein Ausgangssignal von 203 wird einem Datendemodulator 205 zugeführt. 205 operiert im Wesentlichen phasen- oder frequenzempfindlich und koppelt demodulierte Lasteinheitsdaten (FSKLdata) zu 206. Das Ausgangssignal von 203 wird auch 206 und einem Periodenprozessor 204 zugeführt.

204 analysiert die Eingangssignale zeit- oder frequenzempfindlich und generiert im Bezug auf eine vorgegebene Vergleichsgröße ein Ausgangssignal (OCT), welches wiederum 206 als Eingangssignal dient. Ein Ausgangssignal von 206 steuert die Frequenz eines Generators 207, welcher 202 treibt. Dazu umfasst 206 einen Phasenvergleicher mit nachfolgendem Tiefpassfilter.

Der Phasenvergleicher regelt die Phase der Ausgangssignale 203 und 203a über 207 auf Null (Resonanzfrequenz). Zeigt sich z. B. eine Phasendifferenz am Ausgang des Phasenvergleichers innerhalb 206, so erhöht bzw. verringert sich die Regelspannung, welche 207 steuert. Dadurch erhöht bzw. verringert sich die Frequenz des Ausgangssignals von 207 bis die Phasendifferenz wieder null wird (Resonanzfrequenz). Ein weiteres Ausgangssignal von 206 steuert 201 in der Ausgangsspannung oder im Ausgangsstrom. Folglich wird die Schwingkreisenergie bzw. die abgestrahlte Leistung der drahtlosen Übertragungsstrecke gesteuert.

Die Sekundärspule der drahtlosen Übertragungsstrecke L2 bildet zusammen mit C2 einen Serieschwingkreis, welcher auf fsoll (entsprechend der Resonanzfrequenz von C1 und L1) abgestimmt ist.

Ein Gleichrichter 251 richtet die Resonanzspannung gleich und führt sie über einen Tiefpassfilter Lf, Cf einem Schalter SW zu. Wenn SW geschlossen ist, ist der Lastwiderstand RL über eine Speicherinduktivität Ls mit dem Ladekondensator Cf gekoppelt. Wenn SW offen ist und ein Strom in Ls fließt, ist RL nicht mit Cf gekoppelt und die Diode D schließt einen Freilaufstromkreis.

Die Konfiguration SW, D, Ls, Cs und RL entspricht einem Spannungstiefsetzsteller. Ein Tiefsetzkontroller 255 misst die Ausgangsspannung über RL und generiert am Ausgang im Wesentlichen ein Pulsweitensignal (PWM-Signal) um SW zu steuern. Dazu umfasst 255 mindestens: eine Spannungsreferenz, einen Vergleicher, ein Tiefstellregelfilter und einen PWM-Generator (nicht gezeigt). Ein Nullpunktdetektor 252 zeigt einen Vorzeichenwechsel in der Resonanzspannung an.

Alternativ wird in einem weiteren Ausführungsbeispiel der Resonanzstrom oder die Resonanzspannung im Schwingkreis L2, C2 detektiert (nicht gezeigt). Exakte Nullpunkdetektierung ist nicht zwingend erforderlich, wesentlich ist es, exakte Phasensignale der Schwingkreisperiode (oder Halbperiode) zu erhalten. Das Ausgangssignal von 252 dient 255 (dem darin enthaltenen PWM-Generator), einem Analog / Digitalkonverter 256 und einem Datenmodulator 253 als Synchronisation, zudem wird das Ausgangssignal von 252 einem Periodenprozessor 254 zugeführt.

254, entsprechend 204, analysiert das Eingangssignal zeit- oder frequenzempfindlich und generiert im Bezug auf eine vorgegebene Vergleichsgröße ein Ausgangssignal (OCL), welches 255 steuert. Eine oder mehrere Ausgangsspannungen (z. B. von Cf und / oder RL) werden in einem oder mehreren 256 analog digital gewandelt und anschließend in 253 mit einem Referenzwert verglichen (Spannung Ist- Sollwertvergleich). Ein daraus resultierender Regeldifferenzwert wird in 253 in ein Übertragungsformat gebracht und zusammen mit weiteren Daten, welche in 253 generiert und / oder gespeichert sind, dem ModSW als FSKLdata zugeführt. ModSW moduliert mit Cm die Last von 250. Auf diese Weise werden FSKLdata zu 200 übertragen. Alternativ als weiteres Ausführungsbeispiel ist C2 durch Cm und ModSW gesteuert (nicht gezeigt).

Die Ausgangsspannungsregelung der aktuellen Erfindung kann in verschiedenen Betriebsarten erfolgen. Die nachfolgend beschriebenen Betriebsarten sind in verschiedenen Ausführungsbeispielen einzeln und / oder zu unterschiedlichen Zeitpunkten gemeinsam als Kombination aktiv. 255 signalisiert über die mode Verbindung die Betriebsart zu 253. Dieses mode Signal steuert 253, sodass die relevanten Regeldaten (Regeldifferenzwert) der jeweiligen Betriebsart übertragen werden. In einer Betriebsart bleibt SW für die Ausgangsspannungsregelung immer geschlossen oder 250 umfasst keinen Spannungstiefsetzer (RL ist direkt an Cf angeschlossen). Somit detektiert 256 die Ausgangsspannung über RL. Der Regeldifferenzwert (Ist- Sollwertvergleich mit einem ersten Spannungsreferenzwert) in FSKLdata entspricht der Ausgangsspannungsabweichung gegenüber einer gewünschten Ausgangsspannung über RL. Dieser Regeldifferenzwert wird seriell über die drahtlose Kopplung zu 205 übertragen. 206 verwendet diese Daten in einer üblichen Regelfunktion (I-, PI- oder PID) und steuert 201. Somit schließt sich die Schlaufe von RL über FSKLdata zu 201.

In einer weiteren Betriebsart umfasst 250 keinen Spannungstiefsetzer, sondern nur SW. Die Spannungsregelung in 250 wird durch einfaches Unterbrechen der Energiezufuhr (Öffnen von SW) in 250 erreicht und / oder wie oben beschrieben über die geschlossene Schlaufe via Regeldifferenzwert in FSKLdata und 206 in 200.

In einer weiteren Betriebsart arbeitet SW für die Ausgangsspannungsregelung in 250 als PWM-Regler.

256 detektiert die Spannung über Cf. Der Regeldifferenzwert (Ist- Sollwertvergleich mit einem zweiten Spannungsreferenzwert) in FSKLdata entspricht der Spannungsabweichung gegenüber einer gewünschten Spannung über Cf. Dieser Regeldifferenzwert wird seriell zusammen mit einem Regelmaß vom Schalter SW (dessen PWM-Signal oder ein digitales Signal, das dem PWM Tastverhältnis von SW entspricht) über die drahtlose Kopplung zu 205 übertragen.

206 verwendet diese Daten in einer üblichen Regelfunktion (I-, PI- oder PID) und steuert 201. Somit schließt sich die Schlaufe von RL über FSKLdata zu 201. Dies ermöglicht den Wirkungsgrad der drahtlosen Energieübertragung zu optimieren und gewährleistet dennoch den Betrieb mehrerer 250 an einem 200. Weiter resultieren bei der Ausgangsspannungsregelung mittels SW bestmögliche dynamische Eigenschaften, da die Regelung schneller einsetzt (kürzeste Schlaufe).

Einen größeren Ausgangsspannungsregelbereich erhält man, wenn der Spannungstiefsetzer mit einem Spannungshochsetzer kombiniert wird. Dies ist in einer weiteren Betriebsart implementiert und ist in Figur 2 mit den gestrichelten Komponenten aufgezeigt. Zu diesem Zweck schaltet man in Serie zu SW eine Diode Ds und einen zweiten Schalter SWs parallel zur Diode D. Vorteilhafterweise ist D und SWs kombiniert. Arbeitet 250 als Spannungstiefsetzer (Spannung über Cf ist größer als die gewünschte Ausgangsspannung über RL), so ist 255 wie oben beschrieben. SW definiert mit dem PWM die Ausgangsspannung und SWs kann offen bleiben oder schließt als Sklave gemäß dem Status von D. Arbeitet 250 als Spannungshochsetzer (Spannung über Cf ist kleiner als die gewünschte Ausgangsspannung über RL), so bleibt SW über 255 geschlossen. Ds verhindert, dass die höhere Spannung über RL nach Cf abgebaut wird. SWs operiert mit einer PWM, die über das Tastverhältnis die Ausgangsspannung über RL bestimmt. Der Regeldifferenzwert ist wie beim Spannungstiefsetzer vom Spannungswert über Cf bestimmt. Dieser Regeldifferenzwert wird seriell zusammen mit einem Regelmaß vom Schalter SWs (dessen PWM-Signal oder ein digitales Signal, welches dem PWM Tastverhältnis von SWs entspricht) über die drahtlose Kopplung zu 205 übertragen.

206 verwendet diese Daten in einer üblichen Regelfunktion (I-, PI- oder PID) und steuert 201. Somit schließt sich eine Schlaufe von RL über FSKLdata zu 201. Vorteilhafterweise erlaubt diese Kombination von Spannungstief- bzw. - hochsetzer eine stabile Ausregelung der Ausgangsspannung sowohl für kleinere als auch größere empfangene Spannungen über Cf.

Es ist auch einfach ersichtlich, dass ein oder mehrere 250 eine oder mehrere Ausgangsspannungen ausweisen kann.

In einer weiteren Betriebsart, wird der Regeldifferenzwert von mehreren Ausgangsspannungen abgeleitet, welche im Zeitmultiplex abgetastet und / oder über Widerstände addiert werden. Dieser Regeldifferenzwert wird seriell zusammen mit einem Regelmaß von einem oder mehreren Schaltern SW (dessen PWM-Signalen oder einem digitalen Signal, welches der PWM Tastverhältnisse von mehreren Schaltern SW entspricht) über die drahtlose Kopplung zu 205 übertragen. 206 verwendet diese Daten in einer üblichen Regelfunktion (I-, PI- oder PID) und steuert 201. Somit schließt sich die Schlaufe von RL über FSKLdata zu 201.

Werden mehrere 250 an einem 200 betrieben, kombiniert 206 mehrere Regeldifferenzwerte mehrerer empfangener FSKLdata der angekoppelten 250 und steuert 201. Auf diese Weise stellt sich die gesamte abgestrahlte Leistung von 200 so ein, dass sie mehrere 250 speisen kann. Die Feinregelung der Ausgangsspannung innerhalb der einzelnen 250 wird mittels SW und / oder SWs geregelt.

Es ist auch möglich, ein oder mehrere 250 mit kontinuierlich geschlossenem SW zusammen mit einem oder mehreren 250, welche SW und / oder SWs als Ausgangsspannungsregler einsetzen, an einer 200 zu betreiben.

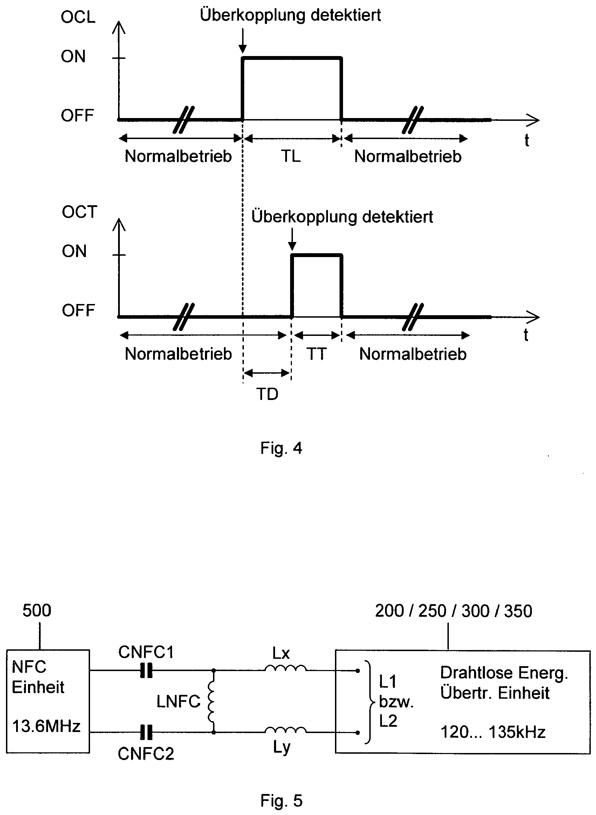

Diese Ausgangsspannungsregelungsverfahren bzw. die verschiedenen Betriebsarten entsprechen dem normalen Betriebszustand (Dauerbetrieb), solange OCL nicht aktiv ist. Für diesen Fall ergibt der Periodenvergleich mit einer vorgegebenen Vergleichsgröße in 250 ein erstes Resultat, welches OCL auf OFF setzt (siehe Figur 4). Dies entspricht dem Betriebszustand während der Energiekopplungsbedingung nach Kurve 1 in den Figuren 1c und 1d.

Vergrößert sich die Energiekopplung weiter (höhere Kopplung k und / oder größere Last) so stellt sich kritische und schließlich überkritische Kopplung ein. Die Eingangsimpedanz zeigt nun mehrere voneinander verschiedene Resonanzfrequenzen (bei jedem Nulldurchgang der Phasenlinie der Eingangsimpedanz). Dies bewirkt in der Regelschlaufe 202, 203, 203a, 203b, 206 und 207 bei kritischer Kopplung ein Phasenjittern um die Resonanzfrequenz, was bei überkritischer Kopplung zu einer Überlagerung von zwei Strom- oder Spannungskurven führt. Dieser Zustand ist hier als Überkopplung definiert und signalisiert einen ungewollten Betriebszustand. Der Zustandswechsel kritisch / überkritisch stellt sich in der Praxis fließend ein.

Für die Energiekopplungssteuerung der drahtlosen Energieübertragung ist es in der Praxis ausreichend, den Zustand überkritische Kopplung eindeutig zu detektieren. Je nach Implementierung der nachfolgend beschriebenen Funktionen spricht 204 bzw. 254 schneller (bereits bei kritischer Kopplung) oder langsamer (erst bei überkritischer Kopplung) an. 254 in 250 vergleicht die Halbperiodendauer der detektierten Nulldurchgänge mit einer vorgegebenen Vergleichsgröße, welche ein wenig kleiner ist als die Halbperiode der Betriebsfrequenz in unterkritischer Kopplung. Dieser Vergleich ergibt nun ein zweites Resultat, welches den Zustand von OCL auf ON (hohes Potenzial) wechselt.

In einem Ausführungsbeispiel kann der Periodenprozessor auch Vielfache der detektierten Halbperioden mit annähernd Vielfachen der Halbperioden der Betriebsfrequenz in unterkritischer Kopplung vergleichen. Die Ansprechzeit des Kopplungsdetektors 254 vergrößert sich dementsprechend.

Das ON in OCL erzwingt in 254 ein Ausgangssignal, welches SW offen lässt solange OCL auf ON ist. Die Funktion des Spannungstiefsetzers ist ausgeschaltet und RL von Cf entkoppelt. OCL bleibt auf ON auch wenn das Zeitsignal am Ausgang von 252 wieder normale Energiekopplungsbedingungen anzeigt (detektierte Halbperiode ist größer als die vorgegebene Vergleichsgröße).

Die tiefere Last hat zur Folge, dass sich die Energiekopplung reduziert. Nach einer beliebigen lastfreien Zeit (TL) ändert der Ausgang von 254 selbstständig (z. B. monostabile Kippstufe oder Timer), OCL wechselt seinen Zustand auf OFF und RL koppelt sich wieder über den geschlossenen SW mit Cf (siehe Figur 4). Der Spannungstiefsetzer arbeitet wieder normal.

Haben sich k und RL nicht geändert, so stellt sich, sobald Lf und Cf eingeschwungen sind, wieder Überkopplung ein. SW öffnet wieder via OCL für das Zeitintervall TL, schließt sich danach wieder usw.. RL wird kontinuierlich von Cf an- bzw. abgekoppelt. Der Mittelwert des wirksamen RL in der Energiekopplung stellt sich auf diese Weise auf den Wert ein, welcher im Wesentlichen dem Grenzwert von RL für kritische Kopplung entspricht. Dies entspricht einer Begrenzung der Energiekopplung auf maximal eins. Da 254 innerhalb von einer oder nur wenigen Halbperioden anspricht und TL ein Vielfaches länger ist, reduziert sich der Betriebszustand, während dem die drahtlose Übertragungsstrecke überkritisch gekoppelt ist, auf ein Minimum oder wird ganz verhindert. Die gesamte Übertragungsstrecke arbeitet dabei in der Quellen- und Lasteinheit im Wesentlichen andauernd auf Resonanzbetrieb, d.h. bei der Resonanzfrequenz. Diese Resonanzfrequenz wird durch 200 und 250 bestimmt.

Vorteilhafterweise ergibt sich dadurch die kleinstmögliche Bandbreite. Weiter bleibt die gesamte Energieübertragungsstrecke immer optimal angepasst, weil sich immer nur der Realanteil in der Übertragungsstrecke ändert. Eine Resonanzfrequenzverstimmung wird immer in 200 ausgeregelt. Der auf 200 wirksame reelle Belastungswiderstand ist durch RL, das Windungsverhältnis von L1 und L2, die Fensterfunktion des Signals OCL und durch die Energiekopplung (k·Q) bestimmt.

Somit entspricht die drahtlose Energieübertragungstrecke einem RL, der direkt (evtl. transformiert durch L1 / L2) an 200 kontaktiert ist und somit einer Drahtverbindung entspricht. Über TL und die Komponenten des Filters Lf und Cf kann das ON / OFF timing in OCL beliebig gestaltet werden. Das An- bzw. Abkoppeln von RL hat keinen störenden Einfluss auf 200, da Lf und Cf als Filter agieren und deshalb 200 gleichmäßig belasten.

In 200 passiert Ähnliches. Wird eine Überkopplung in 204 detektiert, geht OCT auf ON, so schaltet 206 201 ab oder 201 reduziert die Ausgangsleistung auf einen Minimalwert für ein Zeitintervall TT. Dabei spricht OCT, zeitlich verzögert um TD, gegenüber OCL an. Nach vergangenem Intervall TT ändert der Ausgang von 204 selbstständig (z. B. monostabile Kippstufe oder Timer), OCT wechselt seinen Zustand auf OFF und 201 schaltet wieder ein (siehe Figur 4). Falls erneut Überkopplung eintritt, wiederholt sich der Vorgang: 201 schaltet wieder wegen TD verzögert ab, oder reduziert die Ausgangsleistung und schaltet nach dem Intervall TT selbständig ein. Auf diese Weise läuft 200 sicher an und garantiert ein weiches Aufstarten (Softstart), falls sich Überkopplung einstellt.

In einem Ausführungsbeispiel der aktuellen Erfindung ist TD, im Fall von Überkopplung, als längere Ansprechzeit von 204 gegenüber der Ansprechzeit von 254 implementiert.

In einem anderen Ausführungsbeispiel sprechen 204 und 254 gleichschnell an (ähnliche oder gleiche Implementation), dann ist die erforderliche Verzögerung TD auf das Ereignis OCT in 206 implementiert. Operativ sind beide Ausführungen identisch. TD gewährleistet, dass die Energiekopplungsregelung immer in 250 erfolgt. Vorteilhafterweise bleiben andere 250, die mit 200 gekoppelt sind, weiter kontinuierlich mit Energie versorgt, da 200 weiterarbeitet.

TT in 200 und TL in 250 müssen nicht gleich sein. Die Redundanz der zweifachen Implementierung von 208 in 200 und 250 gewährleistet in jedem Fall die Begrenzung der Energiekopplung (k·Q) im Wesentlichen auf den Wert eins. Dies umfasst auch einen möglichen Defekt in 250: dann spricht wenigstens 208 an, falls sich Überkopplung einstellt.

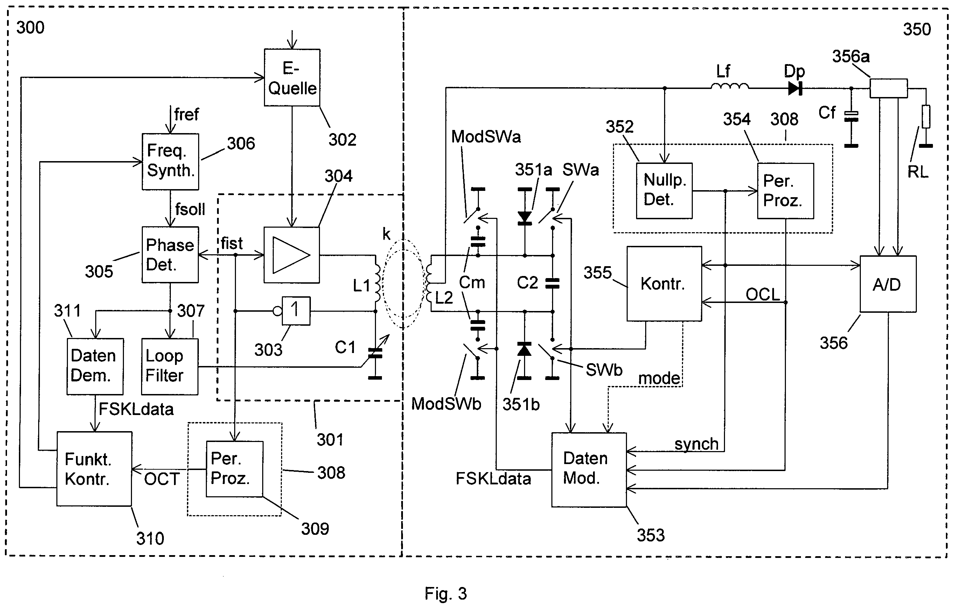

Eine Quelleneinheit kann auch in einem vordefinierten Frequenzbereich Energie abstrahlen. Weiter kann eine Lasteinheit auch als geregelte Stromquelle auf eine Last arbeiten. Dies ist im Blockschaltbild in Figur 3 dargestellt. Die Quelleneinheit 300 umfasst einen Großsignal VCO 301, der von einer gesteuerten Energiequelle 302 mit der nötigen Betriebsspannung versorgt wird.

Der Begriff Großsignal VCO steht hier für einen Oszillator, dessen aktives Element 304 (Verstärker) im Wesentlichen im Schaltbetrieb arbeitet. Weiter wird die Frequenz dieses Oszillators durch einen Strom oder eine Spannung gesteuert. Vorteilhafterweise umfasst die Frequenzsteuerung mindestens einen Kopplungschalter, der mindestens eine Induktivität oder mindestens eine Kapazität über ein variables Kopplungsintervall, welches kleiner ist als eine Schwingkreisperiode, an den übrigen Schwingkreis koppelt.

Der invertierende Verstärker 304 treibt einen Serieschwingkreis, bestehend aus der elektrisch gesteuerten Kapazität C1 und der Primärspule L1 der drahtlosen Übertragungsstrecke. Ein Inverter 303 schließt eine Rückkopplungsschleife auf den Eingang von 304 und sorgt für eine andauernde Strom- bzw. Spannungsschwingung im Schwingkreis (Mitkopplung).

In einem weiteren Ausführungsbeispiel der aktuellen Erfindung ist der Großsignal VCO mit einer Brückengegentaktstufe bestückt oder mit einem Parallelschwingkreis implementiert (nicht gezeigt in Figur 3). Die Funktionen aller beschriebenen Eigenschaften (PLL-Betrieb und Regelausführungen) bleiben gleich wie für den Großsignal VCO mit Serieschwingkreis.

Das Schwingkreissignal (Ausgangssignal von 303 fist) wird in einem Phasenvergleicher 305 mit einem Sollwert (fsoll) verglichen. fsoll wird in einem Frequenzsynthesizer 306 mittels einer Referenzfrequenz (fref) erzeugt. Das Ausgangssignal von 305 wird mittels eines Schleifenfilters 307 gefiltert und anschließend auf die verstellbare Kapazität C1 als Steuergröße gegeben. Schwingt 301 nicht auf fsoll, so generiert 305 ein Fehlersignal am Ausgang, welches nach Filterung mit 307 C1 solange nachstellt, bis fist gleich fsoll wird. Auf diese Weise strahlt 300 elektromagnetische Energie ab, welche in der Frequenz auf fsoll geregelt ist. Jegliche Art der Frequenzverstimmung wie z. B. durch Komponententoleranzen, Alterung der Bauteile oder Änderungen in der Lasteinheit 350 werden innerhalb ein paar Dutzend Schwingkreisperioden ausgeregelt. Der Kopplungsdetektor 308 besteht hier aus dem Periodenprozessor 309, da der Nullpunkt- oder Vorzeichendetektor im Wesentlichen aus 303 besteht. Ein Ausgangssignal von 305 wird einem Datendemodulator 311 zugeführt.

Alternativ, in einem weiteren Ausführungsbeispiel entspricht das Eingangssignal von 311 fist. 311 operiert im Wesentlichen phasen- oder frequenzempfindlich und koppelt demodulierte Lasteinheitsdaten (FSKLdata) zu einem Funktionskontroller 310. Das Ausgangssignal von 303 wird einem Periodenprozessor 309 zugeführt. 309 analysiert die Eingangssignale zeit- oder frequenzempfindlich und generiert im Bezug auf eine vorgegebene Vergleichsgröße ein Ausgangssignal (OCT), welches wiederum 310 als Eingangssignal dient. Ein Ausgangssignal von 310 steuert 306 und definiert auf diese Weise fsoll.

Dazu umfasst 306 im Wesentlichen einen programmierbaren Frequenzteiler. Dieser Frequenzteiler wird in einem Ausführungsbeispiel innerhalb 306 zeitlich so in seinem Teilerwert verändert, dass sich ein beliebiges Frequenzspektrum (z. B. angenähertes Rechteckspektrum oder Sin(x)/x usw.) in fsoll und dementsprechend im abgestrahlten Feld einstellt. Ein weiteres Ausgangssignal von 310 steuert 302 in der Ausgangsspannung oder im Ausgangsstrom.

Die Sekundärspule der drahtlosen Übertragungsstrecke L2 bildet zusammen mit C2 einen Parallelschwingkreis, welcher auf fsoll (entsprechend der Resonanzfrequenz von C1 und L1) abgestimmt ist. Falls fsoll zeitlich verändert wird, so ist die Resonanzfrequenz von C2 und L2 so gewählt, dass sie in die Mitte eines Frequenzbereiches fällt, der wiederum von 300 abgestrahlt wird.

Ein Gleichrichter 351a, 351b richtet die Resonanzspannung gleich und führt sie über ein Tiefpassfilter Lf und einer Diode Dp einem Filterkondensator Cf und der Last RL zu. Parallel zu 351a und 351b sind je ein Schalter SWa und SWb angeschlossen. Vorteilhafterweise sind 351a und SWa bzw. 351b und SWb in je einem Bauteil integriert. Wenn SWa und SWb offen sind, ist RL über 351 a während der einen Schwingkreishalbperiode und über 351b während der anderen Schwingkreishalbperiode über Lf mit dem Schwingkreis L2, C2 gekoppelt. Wenn SWa und SWb gleichzeitig geschlossen sind, ist der Schwingkreis durch SWa und SWb überbrückt, Dp sperrt und RL ist nicht mit dem Schwingkreis L2, C2 gekoppelt. Die Konfiguration SWa, SWb, C2, L2, Lf und Dp arbeitet als Parallelregler für RL. Ein Analog- Digitalwandler 356 misst mittels Stromsensor 356a den Laststrom durch RL. 355 generiert, basierend auf dem Ausgangssignal von 356, im Wesentlichen ein Pulsweitensignal (PWM-Signal) am Ausgang und steuert SWa und SWb. Dazu umfasst 355 mindestens: eine Spannungs- oder Stromreferenz, einen Vergleicher, ein Regelfilter und ein PWM- Generator (nicht gezeigt). Ein Nullpunktdetektor 352 zeigt einen Vorzeichenwechsel in der Resonanzspannung an.

Alternativ wird in einem weiteren Ausführungsbeispiel der Resonanzstrom oder die Resonanzspannung im Schwingkreis L2, C2 detektiert (nicht gezeigt). Das Ausgangsignal von 352 dient 355 (dem darin enthaltenen PWM-Generator), 356 und einem Datenmodulator 353 als Synchronisation. Zudem ist das Ausgangssignal von 352 einem Periodenprozessor 354 zugeführt. 354, entsprechend 309, analysiert die Eingangssignale zeit- oder frequenzempfindlich und generiert im Bezug auf eine vorgegebene Vergleichsgröße ein Ausgangssignal (OCL), welches 355 steuert.

Der Ausgangswert von 356 wird in 353 mit einem Referenzwert verglichen (Ist-Sollwertvergleich). Ein daraus resultierender Regeldifferenzwert wird in 353 in ein Übertragungsformat gebracht und zusammen mit weiteren, in 353 generierten und / oder gespeicherten Daten, ModSWa und ModSWb als FSKLdata zugeführt. ModSWa und ModSWb modulieren mit Cm die Last von 350. Auf diese Weise werden FSKLdata zu 300 übertragen.

Alternativ, als weiteres Ausführungsbeispiel ist Cm an der Anzapfung von L2 über ein ModSW nach Masse ausgesteuert.

Die Ausgangsstromregelung der aktuellen Erfindung kann in verschiedenen Betriebsarten erfolgen. Die nachfolgend beschriebenen Betriebsarten sind in verschiedenen Ausführungsbeispielen einzeln und / oder zu unterschiedlichen Zeitpunkten gemeinsam als Kombination aktiv. 355 signalisiert über die mode Verbindung die Betriebsart zu 353. Dieses mode Signal steuert 353, sodass die relevanten Regeldaten (Regeldifferenzwert) der jeweiligen Betriebsart und übertragen werden.

In einer Betriebsart bleiben SWa und SWb für die Ausgangsstromregelung immer offen. Somit detektiert 356 den Ausgangsstrom in RL. Der Regeldifferenzwert (Ist- Sollwertvergleich mit einem ersten Referenzwert) in FSKLdata entspricht der Ausgangsstromabweichung gegenüber einem gewünschten Strom durch RL. Dieser Regeldifferenzwert wird seriell über die drahtlose Kopplung zu 311 übertragen. 310 verwendet diese Daten in einer üblichen Regelfunktion (I-, PI- oder PID) und steuert 302. Somit schließt sich die Schlaufe von RL über FSKLdata zu 302.

In einer weiteren Betriebsart arbeiten SWa und SWb für die Ausgangsstromregelung in 350 als PWM-Regler. 256 detektiert den Strom durch RL. Der Regeldifferenzwert (Ist- Sollwertvergleich mit einem zweiten Referenzwert) in FSKLdata entspricht der Stromabweichung gegenüber einem gewünschten Strom durch RL. Dieser Regeldifferenzwert wird seriell zusammen mit einem Regelmaß vom Schalter SWa bzw. SWb (dessen PWM-Signal öder ein digitales Signal, welches dem PWM Tastverhältnis von SWa bzw. SWb entspricht) über die drahtlose Kopplung zu 311 übertragen. 310 verwendet diese Daten in einer üblichen Regelfunktion (I-, PI- oder PID) und steuert 302. Somit schließt sich eine Schlaufe von RL über FSKLdata zu 302.

Dies ermöglicht den Wirkungsgrad der drahtlosen Energieübertragung zu optimieren und gewährleistet dennoch den Betrieb mehrerer 350 an einem 300. Weiter resultieren bei der Ausgangsstromregelung mittels SWa bzw. SWb bestmögliche dynamische Eigenschaften, da die Regelung schneller einsetzt (kürzeste Schlaufe).

Es ist auch einfach ersichtlich, dass ein oder mehrere 350 ein oder mehrere Ausgangsströme ausweisen können. In einer weiteren Betriebsart, wird der Regeldifferenzwert von mehreren Ausgangsströmen abgeleitet, welche im Zeitmultiplex abgetastet und / oder addiert werden. Dieser Regeldifferenzwert wird seriell zusammen mit einem Regelmaß von einem oder mehreren Schaltern SWa bzw. SWb (dessen PWM-Signalen oder einem digitalen Signal, welches der PWM Tastverhältnisse von mehreren Schaltern SW entspricht) über die drahtlose Kopplung zu 311 übertragen. 310 verwendet diese Daten in einer üblichen Regelfunktion (I-, PI- oder PID) und steuert 302. Somit schließt sich die Schlaufe von RL über FSKLdata zu 302.

Werden mehrere 350 an einem 300 betrieben, kombiniert 310 mehrere Regeldifferenzwerte mehrerer empfangenen FSKLdata der angekoppelten 350 und steuert 302. Auf diese Weise stellt sich die gesamte abgestrahlte Leistung von 300 so ein, dass sie mehrere 350 speisen kann. Die Feinregelung des Ausgangsstromes innerhalb der einzelnen 350 wird mittels SWa und SWb geregelt.

Es ist auch möglich, ein oder mehrere 350 mit kontinuierlich offenen SWa und SWb zusammen mit einem oder mehreren 350, welche SWa und SWb als Ausgangsstromregler einsetzen, an einer 200 zu betreiben.

Diese Ausgangsstromregelungsverfahren bzw. die verschiedenen Betriebsarten entsprechen dem normalen Betriebszustand (Dauerbetrieb), solange OCL nicht aktiv ist. Für diesen Fall ergibt der Periodenvergleich mit einer vorgegebenen Vergleichsgröße in 350 ein erstes Resultat, welches OCL auf OFF setzt (siehe Figur 4). Dies entspricht dem Betriebszustand während der Energiekopplungsbedingung nach Kurve 1 in den Figuren 1c und 1d. Vergrößert sich die Energiekopplung weiter (höhere Kopplung k und / oder größere Last), so stellt sich kritische- und schließlich überkritische Kopplung ein. Die Eingangsimpedanz zeigt nun mehrere, voneinander verschiedene Resonanzfrequenzen (bei jedem Nulldurchgang der Phasenlinie der Eingangsimpedanz). Dies bewirkt in der Regelschlaufe 301 bei kritischer Kopplung ein Phasenjittern um die Resonanzfrequenz, was bei überkritischer Kopplung zu einer Überlagerung von zwei Strom- oder Spannungskurven führt. Dieser Zustand ist hier als Überkopplung definiert und signalisiert einen ungewollten Betriebszustand. Der Zustandswechsel kritisch / überkritisch stellt sich in der Praxis fließend ein. Für die Energiekopplungssteuerung der drahtlosen Energieübertragung ist es in der Praxis ausreichend, den Zustand überkritischer Kopplung eindeutig zu detektieren.

Je nach Implementierung der nachfolgend beschriebenen Funktionen spricht 309 bzw. 354 schneller (bereits bei kritischer Kopplung) oder langsamer an (erst bei überkritischer Kopplung). 354 in 350 vergleicht die Halbperiodendauer der detektierten Nulldurchgänge mit einer vorgegebenen Vergleichsgröße, welche ein wenig kleiner ist als die Halbperiode der Betriebsfrequenz in unterkritischer Kopplung. Dieser Vergleich ergibt nun ein zweites Resultat, das den Zustand von OCL auf ON (hohes Potenzial) wechselt.

In einem Ausführungsbeispiel kann der Periodenprozessor auch Vielfache der detektierten Halbperioden mit annähernd Vielfachen der Halbperioden der Betriebsfrequenz in unterkritischer Kopplung vergleichen. Die Ansprechzeit des Kopplungsdetektors 354 vergrößert sich dementsprechend. Das ON in OCL erzwingt in 354 ein Ausgangssignal, welches SWa und SWb schließt solange OCL auf ON ist. RL ist von C2, L2 durch Dp entkoppelt. OCL bleibt auf ON auch wenn das Zeitsignal am Ausgang von 352 wieder normale Energiekopplungsbedingungen anzeigt (detektierte Halbperiode ist größer als die vorgegebene Vergleichsgröße).

Die tiefere Last hat zur Folge, dass sich die Energiekopplung reduziert. Nach einer beliebig langen lastfreien Zeit (TL) ändert der Ausgang von 354 selbstständig (z. B. monostabile Kippstufe oder Timer), OCL wechselt seinen Zustand auf OFF und RL koppelt sich wieder über die offenen SWa und SWb mit C2, L2 (siehe Figur 4). Der Gleichrichter 351a, 351b arbeitet wieder normal. Haben sich k und RL nicht geändert, so stellt sich, sobald Lf und Cf eingeschwungen sind, wieder Überkopplung ein. SWa und SWb schließen wieder via OCL für das Zeitintervall TL, öffnen sich danach wieder usw.. RL wird kontinuierlich von C2, L2 an- bzw. abgekoppelt. Der Mittelwert des wirksamen RL in der Energiekopplung stellt sich auf diese Weise auf den Wert ein, welcher im Wesentlichen dem Grenzwert von RL für kritische Kopplung entspricht. Dies entspricht einer Begrenzung der Energiekopplung auf maximal eins.

Da 354 innerhalb von einer oder nur wenigen Halbperioden anspricht und TL ein Vielfaches länger ist, reduziert sich der Betriebszustand, während dem die drahtlose Übertragungsstrecke überkritisch gekoppelt ist, auf ein Minimum oder wird ganz verhindert. Die gesamte Übertragungstrecke arbeitet dabei in der Quellen- und Lasteinheit im Wesentlichen andauernd auf Resonanzbetrieb d.h. bei der Resonanzfrequenz. Diese Resonanzfrequenz wird durch 300 und 350 bestimmt.

Vorteilhafterweise ergibt sich dadurch die kleinstmögliche Bandbreite. Weiter bleibt die gesamte Energieübertragungsstrecke immer optimal angepasst, weil sich immer nur der Realanteil in der Übertragungstrecke ändert. Eine Resonanzfrequenzverstimmung wird immer in 300 ausgeregelt. Der auf 300 wirksame, reelle Belastungswiderstand ist durch RL, das Windungsverhältnis von L1 und L2, die Fensterfunktion des Signals OCL und durch die Energiekopplung (k·Q) bestimmt. Somit entspricht die drahtlose Energieübertragungstrecke einem RL, der direkt (evtl. transformiert durch L1 / L2) an 300 kontaktiert ist und somit einer Drahtverbindung entspricht. Über TL und die Komponenten des Filters Lf und Cf kann das ON / OFF timing in OCL beliebig gestaltet werden. Das An- bzw. Abkoppeln von RL hat keinen störenden Einfluss auf 300, da Lf und Cf als Filter agieren und deshalb 300 gleichmäßig belasten.

In 300 passiert Ähnliches. Wird eine Überkopplung in 309 detektiert, geht OCT auf ON, so schaltet 310 302 ab oder 302 reduziert die Ausgangsleistung auf einen Minimalwert für ein Zeitintervall TT. 350 wird nicht mehr mit Energie versorgt. Dabei spricht OCT, zeitlich verzögert um TD gegenüber OCL, an. Nach vergangenem Intervall TT ändert der Ausgang von 309 selbstständig (z. B. monostabile Kippstufe oder Timer), OCT wechselt seinen Zustand auf OFF und 302 schaltet wieder ein (siehe Figur 4). Falls erneut Überkopplung eintritt, wiederholt sich der Vorgang: 302 schaltet wieder wegen TD verzögert ab, oder reduziert die Ausgangsleistung und schaltet nach dem Intervall TT selbständig ein. Auf diese Weise startet 300 sicher auf und garantiert ein weiches Aufstarten (Softstart), falls sich Überkopplung einstellt.

In einem Ausführungsbeispiel der aktuellen Erfindung ist TD, im Fall von Überkopplung, als längere Ansprechzeit von 309 gegenüber der Ansprechzeit von 354 implementiert.

In einem anderen Ausführungsbeispiel sprechen 309 und 354 gleichschnell an (ähnliche oder gleiche Implementation), dann ist die erforderliche Verzögerung TD auf das Ereignis OCT in 310 implementiert. Operativ sind beide Ausführungen identisch. TD gewährleistet, dass die Energiekopplungsregelung immer in 350 erfolgt. Vorteilhafterweise bleiben andere 350, welche mit 300 gekoppelt sind, aber keine Überkopplung detektieren, weiter kontinuierlich mit Energie versorgt, da 300 weiterarbeitet.

TT in 300 und TL in 350 müssen nicht gleich sein. Die Redundanz der zweifachen Implementierung von 308 in 300 und 350 gewährleistet in jeden Fall die Begrenzung der Energiekopplung im Wesentlichen auf den Wert eins. Dies umfasst auch einen möglichen Defekt in 350: dann spricht wenigstens 308 an, falls sich Überkopplung einstellt.

In einem Ausführungsbeispiel der aktuellen Erfindung wechselt 310 über 306 und 305 die Resonanzfrequenz von 300. Dies ist eine weitere Möglichkeit die Energiekopplung zu reduzieren. Dadurch kann die Kopplung k und / oder die Güte Q von 350 und vor allem aber die Amplitude von 301 ändern. Dies kann ausreichen, dass sich keine Überkopplung mehr einstellt. Somit hat 300 gegenüber 200 einen Freiheitsgrad mehr durch die beliebig steuerbare Resonanzfrequenz. Dieser Resonanzfrequenzwechsel erfolgt allein oder mit einer Steuerung von 302.

Vorteilhafterweise bieten die beschriebenen Verfahren der unterschiedlichen Betriebsarten von 200, 250, 300 und 350 der Figuren 2 und 3 größte Flexibilität. Jede 250 und 350 kann selbst bestimmen, nach welchem Verfahren die Ausgangsspannung bzw. der Ausgangsstrom geregelt werden soll. Der Regeldifferenzwert, welcher in FSKLdata übertragen wird, beschreibt ein Maß, ob mehr oder weniger Energie über die drahtlose Übertragungstrecke von 200 bzw. 300 zu 250 bzw. 350 nachgeschoben werden soll.

In einem Ausführungsbeispiel der aktuellen Erfindung werden bei mehreren Ausgangsspannungen in 250 oder mehreren Ausgangsströmen in 350 nur einzelne Teillasten über mehrere Schalter (SW) bzw. Dioden (Dp) in 250 bzw. 350 bei Überkopplung nacheinander abgekoppelt. Auf diese Weise bleiben andere Teillasten von 250 bzw. 350 weiter ununterbrochen mit Energie versorgt.

Allgemein gilt, dass die Energiekopplungsbegrenzung der aktuellen Erfindung die übertragene Energie bzw. Leistung begrenzt. Je nach Dimensionierung der beschriebenen Funktionen und Betriebsarten sinkt eine Ausgangsspannung durch RL bzw. ein Ausgangsstrom in RL mehr oder weniger ab. Dank der vorhandenen Energiespeicher (Ls, Cs in 250 bzw. Lf, Cf in 350) schaltet sich desshalb die Ausgangsspannung bzw. der Ausgangsstrom nicht zwangsläufig ab. Es arbeiten alle Verfahren aller Betriebsarten miteinander zusammen und die Paarung von einer oder mehrerer beliebiger 250 oder 350 mit einer 200 oder 300 kann beliebig permutiert werden. Vorteilhafterweise wird TL bzw. TT um Faktoren größer gewählt als die Einrastzeit der PLL- Schleife 202, 203, 203a, 203b, 206 und 207 bzw. 301, 305 und 307.

Figur 5 zeigt eine typische flexible Implementation gemäß eines Ausführungsbeispiels der aktuellen Erfindung: eine Sende- und / oder Empfangskopplungsspule (LNFC), welche in zwei verschiedenen Frequenzbereichen gleichzeitig und / oder zu verschiedenen Zeitpunkten in zwei verschiedenen Hauptanwendungen benützt wird.

Die erste Hauptanwendung ist eine RFID oder Nahfeldkommunikation (NFC) mittels induktiv gekoppelter Induktivitäten und operiert in einem ersten Frequenzbereich oberhalb 1MHz (z. B. 6,78MHz oder 13,56MHz). Die Kondensatoren CNFC1 und CNFC2 stimmen LNFC auf den ersten Frequenzbereich ab und / oder passen LNFC an den Ein- oder Ausgang der Verarbeitungseinheit 500 der ersten Hauptanwendung an. Gleichzeitig entkoppeln CNFC1 und CNFC2 einen Betriebszustand wie Senden oder Empfangen der zweiten Hauptanwendung von einem Betriebszustand der ersten Hauptanwendung.

Zusätzlich sind in einem weiteren Ausführungsbeispiel der Erfindung Schalter oder Amplitudenbegrenzungsmittel (z. B. Dioden) implementiert, um die Ein-Ausgangsstufe von 500 vor Überspannung zu schützen (nicht in Figur 5 gezeigt). Dabei sind z. B. Begrenzungsdioden zu einem Bezugspotenzial geschaltet. Die Schalter sind in Serie und / oder als Schalter auf ein Bezugspotential implementiert.

Die zweite Hauptanwendung ist eine drahtlose Energieübertragung und operiert in einem zweiten Frequenzband unterhalb 1MHz (z. B. 120... 135kHz). Die Spulen Lx und Ly stimmen LNFC auf den zweiten Frequenzbereich ab und / oder passen LNFC an den Ein- oder Ausgang der Verarbeitungseinheit 200 / 250 / 300 / 350 der zweiten Hauptanwendung an. Gleichzeitig entkoppeln Lx und Ly einen Betriebszustand wie Senden oder Empfangen der zweiten Hauptanwendung von einem Betriebszustand der ersten Hauptanwendung. Die Verarbeitungseinheit 200 / 300 / 250 / 350 entspricht einer oder mehreren, zu unterschiedlichen Zeitpunkten aktiven, gleichbenannten Blöcke der Figuren 2 und 3. So operiert die zweite Hauptanwendung in einem Ausführungsbeispiel der aktuellen Erfindung als Sender und strahlt Energie über LNFC ab.

In einem anderen Ausführungsbeispiel der aktuellen Erfindung arbeitet die zweite Hauptanwendung als Empfänger und nimmt Energie über LNFC auf. Vorteilhafterweise arbeitet 250 in der zweiten Hauptanwendung als Spannungshochsetzer, da die induzierte Spannung wegen der geringen Induktivität von LNFC (im Bereich 4uH... 20uH) relativ klein ist und die Entkopplungsinduktivitäten Lx und Ly eher groß sind (im Bereich 30...100uH).

Werden mehrere 250 / 350 an einem 200 oder 300 betrieben, kann die Kommunikation der einzelnen FSKLdata gestört werden. Aus diesem Grund werden die einzelnen FSKLdata mittels periodischen oder zufälligen Zeitmultiplex übertragen. D.h. ModSW bleibt offen oder geschlossen falls keine FSKLdata übertragen werden.

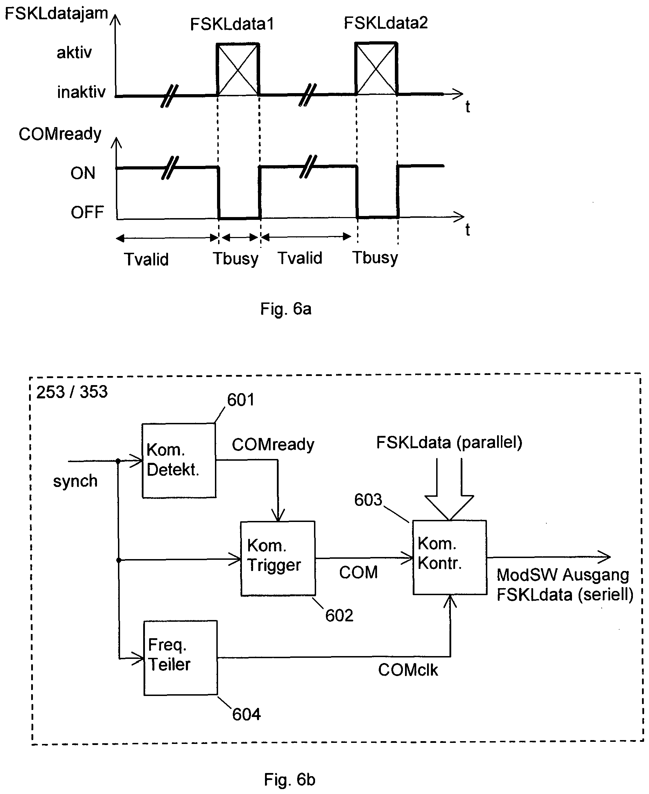

Figur 6a zeigt zwei zu unterschiedlichen Zeitpunkten übertragene FSKLdata1 und FSKLdata2, wobei diese Daten von derselben oder von zwei verschiedenen 250 oder 350 generiert worden sind. In den Zeitintervallen Tbusy können keine weiteren FSKLdata gesendet werden, da der Kanal besetzt ist (die Störung FSKLdatajam ist aktiv). 253 und 353 umfasst desshalb einen Kommunikationsdetektor 601, der Tbusy anzeigt (siehe Figur 6b). Als Eingangssignal von 601 dient das Signal synch.

Synch wird innerhalb 601 zeit- und / oder frequenzkritisch analysiert und generiert am Ausgang ein binäres Signal COMready, welches im Fall von Tbusy auf OFF steht, andernfalls auf ON. Der Kommunikationstrigger 602 generiert einen positiven periodischen oder zufälligen Ausgangspuls COM von der Länge der zu versendenden FSKLdata, der zeitlich so gewählt wird, dass er in Tvalid fällt. Dieser Puls signalisiert dem Kommunikationskontroller 603 den Zeitmoment, um die in einem Register bereitgestellten FSKLdata (oder mindestens Teile davon) seriell mit dem Takt COMclk an den ModSW zu leiten. COMclk wird hierzu mittels Frequenzteiler 604 von synch heruntergeteilt. Dabei werden FSKLdata vorteilhafterweise immer zeitlich synchron zu den Schwingkreisperioden verschickt. Dies vereinfacht 205 und 311 und gewährleistet eine gute Empfangsempfindlichkeit.

FSKLdata überträgt binäre Information, welche differenziell in zwei Phasen encodiert ist und mit einem Takt ausgegeben wird, der einen Teiler von synch ist. Die binäre Information ist in Bytelänge formatiert. Das Kommunikationsprotokoll FSKLdata weist Daten auf, welche in einen Header (konstante Bitlänge), die Nachricht (variable Bitlänge) und eine Prüfsumme (konstante Bitlänge) aufgeteilt sind.

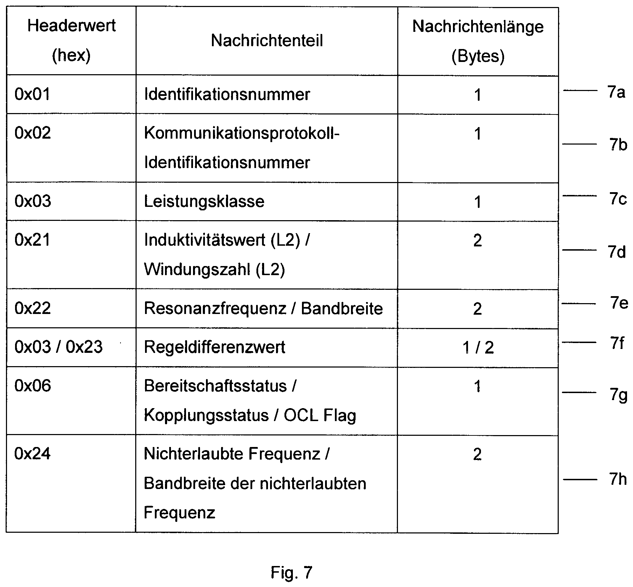

Der Header definiert den Nachrichtenteil der folgenden Nachricht und deren Länge in Bytes. So definieren z. B. die unteren 4 Bits des Headers den Nachrichtenteil und die oberen 4 Bits die Nachrichtenlänge (siehe Figur 7). Dabei können auch ein oder mehrere Nachrichtenteile unterschiedlich lang sein (z. B. Regeldifferenzwert in Figur 7f). Die Nachricht überträgt den Nachrichtenteil, der zuvor im Header angezeigt wurde. Die Prüfsumme überträgt einen CRC- oder Hashwert der Nachricht und alternativ auch inklusive Header.

In einem ersten Nachrichtenteil wird mindestens eine in 250/350 vorgespeicherte Identifikationsnummer übertragen (siehe Figur 7a).

In einem weiteren Ausführungsbeispiel der aktuellen Erfindung wird eine Identifikationsnummer für ein Zeitinterval generiert (z. B. Dauer der Energieübertragung).

In einem weiteren Nachrichtenteil wird eine Identifikationsnummer, welche eine Kommunikationsprotokollversion der Nachricht (Header- / Nachrichtenteil-Kodierung nach dem Muster von Figur 7 oder ähnlich) charakterisiert, übertragen (siehe Figur 7b).

In einem weiteren Nachrichtenteil wird mindestens ein Wert einer Leistung oder einer Leistungsklasse übertragen (siehe Figur 7c).

In einem weiteren Nachrichtenteil wird mindestens ein Wert einer sekundären Empfangsinduktivität (L2) und / oder deren Windungszahl von L2 übertragen (siehe Figur 7d).

In einem weiteren Nachrichtenteil wird mindestens ein Wert einer Resonanzfrequenz und / oder eine Empfangsbandbreite übertragen (siehe Figur 7e).

In einem weiteren Nachrichtenteil wird mindestens ein Wert eines Regeldifferenzwertes oder ein Regeltrend übertragen (siehe Figur 7f).

In einem weiteren Nachrichtenteil wird mindestens ein Wert eines Kopplungs- oder Energiekopplungsstatus (OCL Flag) und / oder ein Bereitschaftsstatus übertragen (siehe Figur 7g). Das OCL Flag ist ein Bit, das durch das OCL Signal in 253 bzw. 353 gesetzt wird.

In einem weiteren Nachrichtenteil wird mindestens ein Wert eines nicht erlaubten Frequenzbereichs übertragen (siehe Figur 7h). 200 oder 300 liest diese Werte und setzt, soweit möglich, Operationsbedingungen gemäß der empfangenen Nachricht- oder Nachrichtenteile.

So werden in einem Ausführungsbeispiel der aktuellen Erfindung mindestens ein oder mehrere Nachrichtenteile der empfangenen Nachricht, gemäß der empfangenen Protokollidentifikation, verarbeitet.

In einem weiteren Ausführungsbeispiel wird 201 bzw. 302 in der Ausgangsleistung gemäß dem Regeldifferenzwert gesteuert und gemäß Leistungsklasse und / oder der Induktivität L2 und / oder der Windungszahl von L2, falls nötig, begrenzt. Zeigt z. B. ein empfangener Regeldifferenzwert einen Maximalbetrag an, so wird die auf diese Weise die abgestrahlte Leistung so weit begrenzt bzw. reduziert bis kein empfangener Regeldifferenzwert mehr einen Maximalbetrag anzeigt. Dies garantiert Übersteuerungsschutz aller 250 bzw. 350.

Weiter wird zusätzlich optional gemäß den in FSKLdata empfangenen Bereitschaftsstatus und / oder Kopplungs- oder Energiekopplungsstatus (OCL Flag) 201 bzw. 302 an- bzw. abgeschaltet (andauernde Energieübertragung bzw. keine Energieübertragung) oder kontinuierlich zwischen beiden umgeschaltet (Burstmode).

In einem weiteren Ausführungsbeispiel wird 306 in fsoll so gesteuert, dass die abgestrahlte Leistung einem vorgegebenem Wert bei einer vorgegebenen Resonanzfrequenz oder Frequenzbandbreite, unter Einhaltung von nicht erlaubten Teilfrequenzen, entspricht oder sich ihm zumindest annähert.

In einem weiteren Ausführungsbeispiel wird 310 so gesteuert, dass für bestimmte Identifikationsnummern kein elektromagnetisches Feld für drahtlose Energieübertragung generiert oder zumindest die abgestrahlte Leistung innerhalb eines Frequenzbereichs begrenzt wird. Auf diese Weise können einzelne 250 / 350 gesteuert mit Energie versorgt bzw. nicht mit Energie versorgt werden.

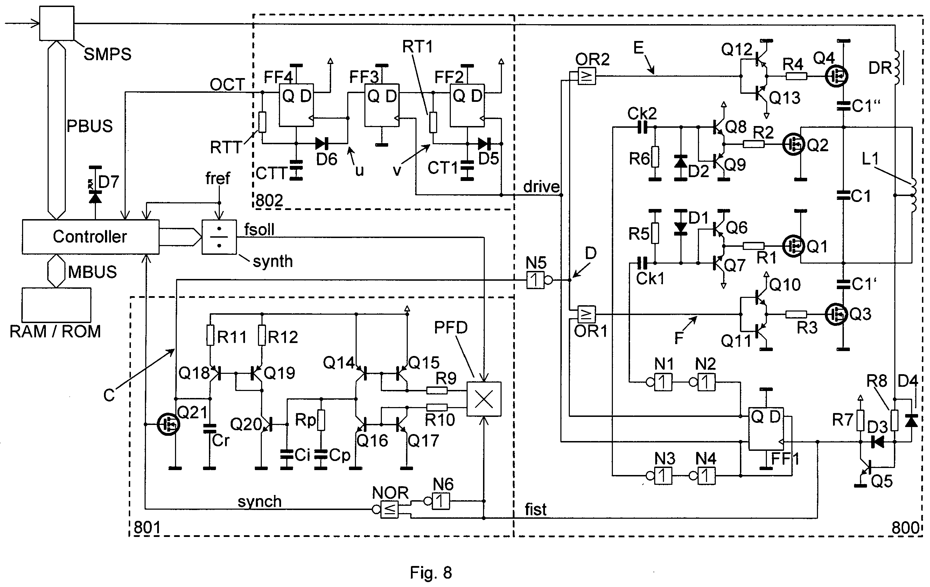

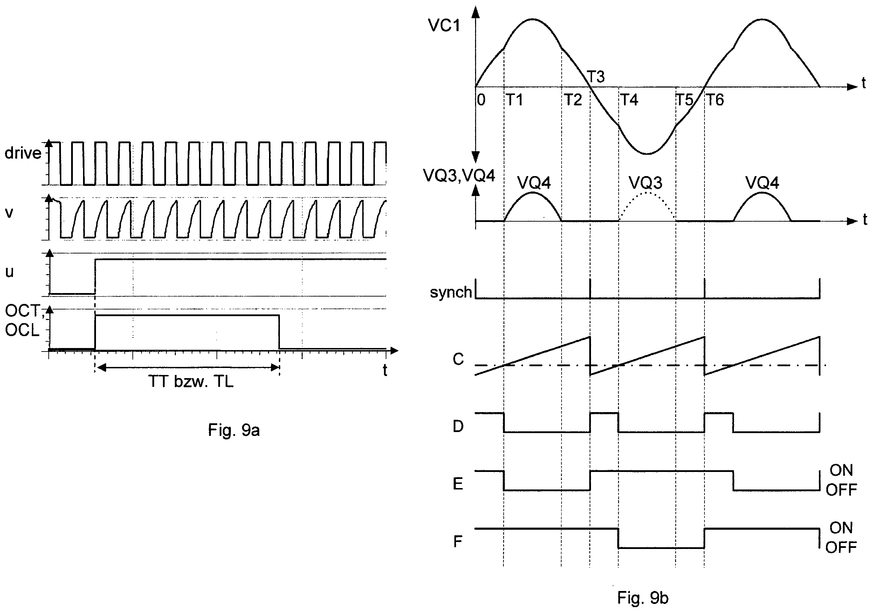

Figur 8 zeigt ein Beispiel einer Detailschaltung gemäss 300 in Figur 3. In den Figuren 9a und 9b sind Signalkurvenformen gezeigt, auf welche in der weiteren Beschreibung verwiesen wird. Ein Großsignal VCO, hier als Parallelgegentaktschaltung mit Q1 und Q2, treibt den Parallelschwingkreis aus L1, C1. DR speist die Mittelanzapfung von L1 mit Energie, die von einer steuerbaren Energieversorgung SMPS geliefert wird. Vorteilhafterweise ist die Spannung über L1 in dieser Schwingkreistopologie unabhängig von der Güte und als Konstante mit der Betriebsspannung am Ausgang vom SMPS verknüpft. R8, D3 und D4 schalten Q5 immer durch, außer während den Spannungsnulldurchgängen der Schwingkreisspannung.

Die Spannung über R7 taktet das D-Flipflop FF1, welches als Frequenzteiler operiert. Die Ausgangssignale werden mittels N1... N4 verzögert auf die DC-Trennstufe D1, D2, R5, R6, Ck1 und Ck2 gekoppelt. Die nachfolgenden Q6... Q9, R1 und R2 treiben Q1 und Q2. Das Ausgangssignal fist von Q5 wird gleichzeitig an den Eingang des Phasenvergleichers PFD des Blocks 801 gekoppelt, der fist mit fsoll vergleicht. 801 entspricht im Wesentlichen 305 und 307.

Die Ladungspumpe R9, R10, Q14, Q15, Q16 und Q17 generiert im PLL-Schleifenfilter Ci, Cp und Rp eine Fehlerspannung, welche der Phasendifferenz von fist und fsoll entspricht. Diese Fehlerspannung generiert in Cr durch den Strom in Q18... Q20 eine Rampe, welche durch wiederholendes kurzes Entladen von Cr durch Q21 in einen Sängezahn geformt wird (Signalkurve C). fist wird mittels NOR und N6 in kurze Pulse mit konstanter Zeit gebracht, steuert als synch Q21 und synchronisiert die FSKLdata Demodulation im Controller (Signalkurve synch).

Diese Sägezahnspannung schaltet N5 um, sobald dessen Schwellenspannung erreicht ist (siehe T1, T3, T4, T6 Schnittpunkt mit der gestrichelten Linie in C und Ausgangssignal Kurve D). Die nachfolgenden OR1 und OR2 Verknüpfungen ordnen den zeitlichen Ablauf von Signal D den entsprechenden Kopplungschaltern Q3 bzw. Q4 zur Großsignalsteuerung der resultierenden Gesamtkapazität C1 zu. Die Treibersignale von FF1 sind zu einander gegenphasig und wechseln ihren Zustand an 0, T3, und T6. Auf diese Weise wird nur jede zweite Periode von D in E bzw. F übernommen. Die Treiber Q10... Q13 schalten Q3 bzw. Q4 dementsprechend über R3 und R4. So bildet sich über Q3 bzw. Q4 abwechselnd eine Sinushalbwelle pro Schwingkreisperiode (siehe Signalkurve VQ3 gestrichelt bzw. VQ4). R1... R4 sind niederohmig und verhindern Transienten in der Schalteransteuerung. Q3 und Q4 schließen sich während dem Interval T2, T3 (Q4) und dem Interval T5, T6 (Q3) selbständig durch ihre internen Dioden, sobald sich C1' bzw. C1'' entladen hat. Diese Phasenansteuerung der wirksamen Parallelkapazität aus C1' und C1'' ergibt den Wertebereich von C1tot = C1+0,5·C1', falls C1'= C1'' ist. Auf diese Weise ist fist immer perfekt auf fsoll ausgeregelt. fsoll wird mittels programierbarem Teiler synth von fref heruntergeteilt. Die Verzögerungen N1... N4 kompensieren die Signallaufzeit von fist bis D und sorgen für den vollen Aussteuerungsbereich in C1tot. Der eine Ausgang von FF1 ist als drive zum Clockeingang von FF2 und FF3 gekoppelt. Mit der steigenden Flanke wird FF2 gesetzt und nach erreichen des Schwellwertes über CT1 auf Null gesetzt. RT1 definiert mit CT1 die Zeitkonstante (Vergleichswert).

Erreicht die Signalkurve v den Schwellwert des Reset Einganges von FF2 wird immer nur ein Tief an den Ausgang von FF3 gelatched (siehe Signalkurve u). Wird der Schwellwert am Reset Eingang von FF2 nicht erreicht (weil drive eine zu hohe Frequenz hat) wird ein Hoch an den Ausgang von FF3 gelatched. Diese Situation stellt sich nach der zweiten drive Periode in Figur 9a ein, da drive in diesem Beispiel eine so hohe Frequenz aufweist, dass v nie den Schwellwert erreicht (andauernde Überkopplung).

D5 gewährleistet den Reset von der Spannung über CT1. Die monostabile Kippstufe FF4, RTT und CTT generieren ein Hoch (ON) in OCT, sobald u für mehr als eine drive Periode gesetzt ist. Nach Verstreichen eines Zeitintervals (TT) erreicht die Spannung über CTT den Schwellwert, welcher FF4 an dessen Reset wieder zurücksetzt. OCT wird an den Controller gekoppelt, falls erforderlich zusätzlich verzögert und danach zur Steuerung von SMPS über PBUS benutzt. Gleichzeitig spricht der optische Indikator D7 an um eine Energieüberkopplung (Überkopplung) zu signalisieren.

Der Controller weist neben neben der Teilerprogrammierung von synth auch den FSKLdata Datendemodulator auf. Dazu wird die Frequenzabweichung mittels Periodenzähler vermessen und dessen zeitlicher Verlauf ausgewertet. Die erhaltenen FSKLdata steuern in bekannter Weise SMPS und / oder synth und optionell noch weitere optische Indikatoren (nicht gezeigt in Figur 8). Zu diesem Zweck umfasst der Controller einen Mikrokontroller mit RAM und ROM Speicher und / oder ein PLD / FPGA und / oder ASIC Teile.

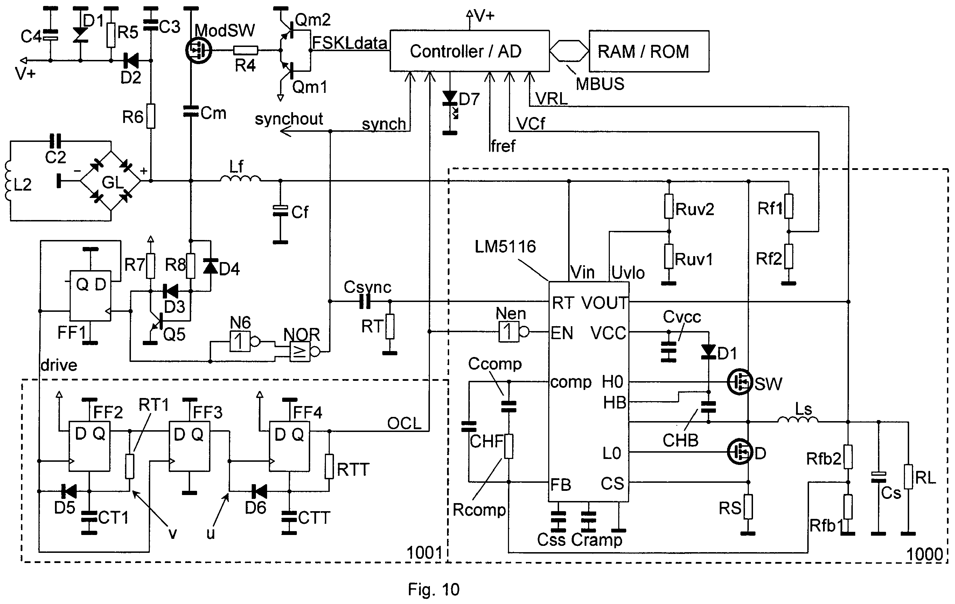

Figur 10 zeigt die Detailschaltung eines Empfängers 250 der drahtlosen Energieübertragung gemäss Figur 2. L2 empfängt die elektromagnetischen Feldlinien und formt mit C2 den Serieschwingkreis. GL richtet das Empfangssignal gleich und führt es nach der Filterung mit Lf und Cf an SW innerhalb 1000. Dieser Block enspricht einem Spannungstiefsetzer und ist als Auszug des Datenblatts von LM 5116 gezeigt. D ist dabei als als Schalter implementiert und LS und Cs sind Speicherelemente. Die genaue Detailfunktion von LM5116 in Verwendung der hier gezeigten Komponenten ist dem Datenblatt zu entnehmen.

Der Operationsmode von LM5116 erfolgt im Diodennachbildungsmode, alternativ auch im Synchronmode. Rfb1 und Rfb2 greifen die Ausgangsspannung über RL ab und führen sie an den Rückführungseingang FB. Die Schaltfrequenz des PWM- Generators innerhalb LM5116 ist hier direkt mit dem elektromagnetischen Feld synchronisiert. Dazu schalten R8, D3 und D4 immer Q5 durch, außer während den Spannungsminimas der gleichgerichteten Schwingkreisspannung. Die Spannung über R7 wird mittels N6 und NOR in kurze Pulse geformt und steuert über Csync und RT den RT Eingang von LM5116. Dadurch ist die interne PWM- und Schaltfrequenz von 1000 synchron zum in L2, C2 empfangenen elektromagnetischen Wechselfeld. Vorteilhafterweise belastet 1000 durch diese direkte Synchronisierung (nur durch LF, Cf gefiltert) den Schwingkreis L2, C2 auf Halbperiodenbasis und somit fallen Energieladezeitinteval und Energieentladezeitinterval in L2, C2 zeitlich zusammen. Dies reduziert die erforderliche Kapazitätsgröße und Ströme in Cf gegenüber dem unsynchronisierten Fall bei gleichen Filterungseigenschaften. Dies reduziert die Kosten und erhöht die Zuverlässigkeit.

Zusätzlich wird der NOR Ausgang (synch) auf den Controller/AD als Synchronisation gegeben. Die Spannung über R7 wird in FF1 in der Frequenz geteilt und anschließend in 1001 auf Überkopplung in der Energieübertragung analysiert. 1001 entspricht 802 und somit sind auch die Signalkurven von Figur 9a gültig. Der Ausgang von 1001 OCL wird negiert durch Nen auf den EN Eingang von LM5116 gekoppelt. Wird Überkopplung detektiert (OCL ist auf Hoch), öffnet somit SW und der Spannungstiefsetzer transferiert keine weitere Energie von Cf zu RL.

OCL ist auch im Controller zusammen mit weiteren zu übertragenden Werten verarbeitet. Hier der Verweis auf OCT und Controller in Figur 8. Der Controller in Figur 8 weist für das operative Verhalten mit der Lasteinheit in Figur 10 eine zusätzliche Verzögerung auf. Diese Verzögerung ist so groß, dass das zur Steuerung operative OCT nach OCL wirkt (siehe Figur 4). Das operative zeitliche Verhalten von OCT und OCL im Gesamtsystem der drahtlosen Energieübertragungsverfahren gilt nach Figur 4.

Das in Figur 9a gezeigte Zeitverhalten gilt nur der quantitativen Veranschaulichung von 1001.

In einem anderen Ausführungsbeispiel der aktuellen Erfindung entfällt 1001 in Figur 10. Durch direkte Periodenvermessung mittels Zählverfahren durch fref in Controller/AD wird OCL innerhalb einer synch Periode bestimmt. Für diesen Fall weist Controller in Figur 8 eine kleinere oder keine zusätzliche Verzögerung auf. In Figur 10 ist die Ausgangsspannung über RL und die Spannung über Cf nach Spannungsteilung mittels Rf1 und Rf2 an den Controller/AD gekoppelt. Der im Controller vorhandene Analog- Digitalwandler (AD) bringt diese Eingangswerte in ein digitales Format.

Diese Daten werden in bekannter Weise (Protokollformatierung und Redundanzzusatz) und weiteren Werten (siehe Figur 7) als FSKLdata über die Treiber und R4 an ModSW gekoppelt. ModSW legt Cm während Vielfachen von Schwingkreisperioden, entsprechend der Bitrate, an AC- Masse und ändert auf diese Weise die Kapazität von C2.

Die Bitrate wird von synch im Controller/AD nach Figur 6b heruntergeteilt. Ist der Controller/AD als sequentielle Ablaufsteuerung (Software) implementiert, ist Figur 6b in der Implementation leicht verschieden. Wichtig ist, dass die Datenrate (Bitrate) synchron zu synch erfolgt und ein allfälliger Übertragungskonflikt (FSKLdatajam) vermieden wird. Hierzu detektiert der Controller/AD mittels der Referenzfrequenz Perioden- oder Frequenzänderungen in synch und detektiert allfällige vorhandene FSKLdata von andern Lasteinheiten.

Alternativ wird in einer Ausführung der aktuellen Erfindung allfällige andere FSKLdata demoduliert und dem Benutzer angezeigt (z. B. mindestens ein Teil von Figur 7). Zur Datenverarbeitung benötigt der Controller/AD interne AD-Wandler, RAM und ROM Speicher und deren Kopplungsmittel (MBUS) zum Controller. Die Verarbeitungsfrequenz (Clock) erfolgt mit fref oder über ein Vielfaches von synch. R6 und C3 eliminieren oder vermindern Spannungstransienten am Ausgang von GL (Snubber). Die dabei entstehende Energie wird an einem Widerstand abgebaut oder alternativ wie hier gezeigt als zusätzliche Betriebsspannung V+ genutzt (z. B. für den Controller/AD). Dazu lädt D2 C4 und D1 begrenzt V+. Alternativ ist in Serie zu D2 eine Spule geschaltet (nicht gezeigt). Somit verbleibt der Lasteinheit immer eine minimale Grundlast. Weiter wird diese Grundlast auch durch Ruv1, Ruv2, Rf1, Rf2 und der Grundlast von LM5116 bestimmt.

Es ist dem technisch versierten Fachmann klar, dass beschriebene Teile der Figuren 2, 3, 8 und 10 bzw. sämtliche beschriebene Verfahren digitales Signalprozessing umfassen. Dieses kann diskret oder integriert als programmierbare Logikschaltung (PLD, FPGA) und als Hardware oder Softwareteil eines Mikrokontrollers implementiert werden. Weiter sind auch beliebig viele Teilblöcke der Figuren 2, 3, 8 und 10 in integrierten Schaltungen zu integrieren (ASICs).

In einem Ausführungsbeispiel der aktuellen Erfindung dient synch als Frequenzreferenz von anderen Kommunikationsmitteln wie z. B. NFC, RFID, Bluetooth, WLAN, UWB usw. (siehe Ausgang synchout in Figur 10). Dabei wird synch in einem PLL auf ein ganzzahliges Vielfaches gebracht und steuert eine Datenrate (Bitrate) oder definiert oder synchronisiert die Übertragungsfrequenz und / oder ein Kommunikationszeitfenster (Kommunikationszeitschlitz) einer Zeitmultiplexübertragung und / oder steuert eine Zufallscodeabfolge eines Codemultiplexverfahrens (Frequenzhopping FH, Direktsequenzverfahrens).

## Patentansprüche

1. Eine Quelleneinheit einer drahtlosen elektrische Energieübertragungsstrecke basierend auf Nahfeld gekoppelten Resonanzkreisen umfassend:

mindestens einen ersten Resonanzkreis (L1, C1), um Leistung abzustrahlen, mindestens ein Detektor (208, 308), welcher eine Kopplungsbedingung des mindestens einen ersten Resonanzkreises (L1, C1) und mindestens einem zweiten Resonanzkreis (L2, C2), welche durch Nahfeldgekopplung miteinander gekoppelt werden, detektiert und **dadurch gekennzeichnet ist;**
**dass** mindestens eine Steuereinrichtung (201, 206, 207), die Leistungsabstrahlung durch den ersten Resonanzkreis (L1, C1), reagierend auf mindestens eine von der detektierten kritischenund überkritischen Kopplungsbedingung, entweder unterbricht, minimiert oder an einer anderen Übertragungsfrequenz fortsetzt.

2. Die Quelleneinheit gemäß Anspruch 1, wobei die Quelleneinheit eine geschlossene Frequenzund/oder Phasenregelschleife umfasst, um den mindestens einen ersten Resonanzkreis (L1, C1) anzutreiben.

3. Die Quelleneinheit gemäß Anspruch 1, wobei der mindestens eine erste Resonanzkreises (L1, C1) Teil eines Oszillators ist.

4. Die Quelleneinheit gemäß Anspruch 1, wobei mindestens ein Detektor (208, 308) auf die Periode oder die Frequenz von einer Spannung oder einem Strom des mindestens einen Resonanzkreises (L1, C1) reagiert, um mindestens eine von der kritischen- und überkritischen Kopplungsbedingung zu detektieren.

5. Ein Lasteinheit einer drahtlosen elektrische Energieübertragungsstrecke basierend auf Nahfeld gekoppelten Resonanzkreisen umfassend:

mindestens einen zweiten Resonanzkreis (L2, C2), um Leistung zu empfangen und mindestens einen Teil dieser empfangenen Leistung zu mindestens einer Last (RL) zu übertragen, mindestens ein Detektor (208, 308), welcher eine Kopplungsbedingung des mindestens einen zweiten Resonanzkreises (L2, C2) und mindestens einem ersten Resonanzkreis (L2, C2), welche durch Nahfeldgekopplung miteinander gekoppelt werden, detektiert und **dadurch gekennzeichnet ist;**
**dass** mindestens eine Steuereinrichtung (255, 355, SW, SWa, SWb), die Leistungsübertragung zwischen dem mindestens einen zweiten Resonanzkreis (L2, C2) und der mindestens einen Last (RL), reagierend auf mindestens eine von der detektierten kritischen- und überkritischen Kopplungsbedingung steuert.

6. Die Lasteinheit gemäß Anspruch 5, wobei die mindestens eine Steuereinrichtung (255, 355, SW, SWa, SWb), den mindestens einen zweiten Resonanzkreis (L2, C2) und die mindestens eine Last (RL), reagierend auf mindestens eine von der detektierten kritischen- und überkritischen Kopplungsbedingung, für mindestens ein Zeitinterval (TL) entkoppelt.

7. Die Lasteinheit gemäß Anspruch 5, wobei mindestens ein Detektor (208, 308) auf die Periode oder die Frequenz von einer Spannung oder einem Strom des mindestens einen zweiten Resonanzkreises (L2, C2) reagiert, um mindestens eine von der kritischen- und überkritischen Kopplungsbedingung zu detektieren.

8. Die Lasteinheit gemäß Anspruch 5, wobei die mindestens eine Steuereinrichtung (255, 355, SW, SWa, SWb), mindestens einen Serieschalter (SW) umfasst, um die Leistungsübertragung zwischen dem mindestens einen zweiten Resonanzkreis (L2, C2) und der mindestens einen Last (RL) zu steuern.

9. Die Lasteinheit gemäß Anspruch 5, wobei die mindestens eine Steuereinrichtung (255, 355, SW, SWa, SWb) mindestens einen Parallelschalter (Swa, SWb), oder mindestens einen Parallelschalter (Swa, SWb) und mindestens eine Diode (Dp) umfasst, um die Leistungsübertragung zwischen dem mindestens einen zweiten Resonanzkreis (L2, C2) und der mindestens einen Last (RL) zu steuern.

10. Die Lasteinheit gemäß Anspruch 5, wobei die mindestens eine Steuereinrichtung (255, 355, SW, SWa, SWb) den mindestens einen zweiten Resonanzkreis (L2, C2) und die mindestens eine Last (RL), reagierend auf mindestens eine von der detektierten kritischen- und überkritischen Kopplungsbedingung, für mindestens ein Zeitinterval (TL) entkoppelt, und nach verstreichen dieses Zeitintervals (TL) den mindestens einen zweiten Resonanzkreis (L2, C2) und die mindestens eine Last (RL) wieder miteinander koppelt.

11. Methode zum Abstrahlen von Leistung einer drahtlosen elektrischen Energieübertragungsstrecke, basierend auf Nahfeld gekoppelten Resonanzkreisen umfassend:

a) Abstrahlen von Leistung in mindestens einem ersten Resonanzkreis (L1, C1),
b) Detektieren von mindestens einer Kopplungsbedingung des mindestens einen ersten Resonanzkreises (L1, C1) und mindestens einem zweiten Resonanzkreis (L2, C2), welche durch Nahfeldgekopplung miteinander gekoppelt werden und **dadurch gekennzeichnet ist; dass** das Abstrahlen von Leistung reagierend auf mindestens eine von der detektierten kritischen- und überkritischen Kopplungsbedingung ist, und mindestens eine von;

c1) Unterbrechen des Übertragen von Leistung,
c2) Minimieren des Übertragen von Leistung, und
c3) Fortsetzen des Übertragen von Leistung an einer anderen Übertrangungsfrequenz annimmt.

12. Die Methode nach Anspruch 11, wobei das Detektieren von mindestens einer Kopplungsbedingung basierend auf der Periode oder der Frequenz von einer Spannung oder einem Strom des mindestens einen ersten Resonanzkreises (L1, C1) erfolgt.

13. Methode zum Empfangen von Leistung einer drahtlosen elektrischen Energieübertragungsstrecke, basierend auf Nahfeld gekoppelten Resonanzkreisen umfassend:

a) Empfangen von Leistung in mindestens einem zweiten Resonanzkreis (L2, C2),
b) Koppeln von mindestens einem Teil der empfangenen Leistung zu mindestens einer Last (RL),
c) Detektieren von mindestens einer Kopplungsbedingung des mindestens einen zweiten Resonanzkreises (L2, C2) und mindestens einem ersten Resonanzkreis (L1, C1), welche durch Nahfeldgekopplung miteinander gekoppelt werden und **dadurch gekennzeichnet ist; dass** das Koppeln, von mindestens einem Teil der empfangenen Leistung zu der mindestens einen Last (RL), reagierend auf mindestens eine von der detektierten kritischen- und überkritischen Kopplungsbedingung, für mindestens ein Zeitinterval (TL) unterbrochen wird.

14. Die Methode nach Anspruch 13, wobei das Detektieren von mindestens einer Kopplungsbedingung basierend auf der Periode oder der Frequenz von einer Spannung oder einem Strom des mindestens einen zweiten Resonanzkreises (L2, C2) erfolgt.

15. Eine drahtlose elektrische Energieübertragungsstrecke basierend auf Nahfeldkopplung von mindestens zwei Resonanzkreisen umfassend:

mindestens ein erster Resonanzkreis (L1, C1) gekoppelt mit mindestens einem zweiten Resonanzkreis (L2, C2), um Leistung von einer Quelleneinheit zu mindestens einer Last (RL) zu übertragen und **dadurch gekennzeichnet ist; dass** mindestens zwei Detektoren (208, 308) mindestens eine Kopplungsbedingung der mindestens zwei nahfeldgekoppelten Resonanzkreise mit mindestens zwei unterschiedlichen Ansprechzeiten detektieren, und mindestens eine Steuereinrichtung (201, 206, 207, 255, 302, 306, 310, 355, SW, Swa, SWb, Dp), die Leistungsübertragung zwischen der Quelleneinheit und der mindestens einen Last (RL), reagierend auf mindestens eine von der detektierten kritischen- und überkritischen Kopplungsbedingung, entweder unterbricht, minimiert oder an einer anderen Übertragungsfrequenz fortsetzt.

Fig. 1a

11 Transformatorersatzschaltbild

Fig. 1b

11 Transformatorersatzschaltbild

Fig. 1c

log (I2/I1),
log (V2/V1)

Fig. 1d

Fig. 1e

Fig. 1f

Fig. 1g

Fig. 2

EP 3 402 063 A1

Fig. 3

EP 3 402 063 A1

OCL

Überkopplung detektiert

ON

OFF

Normalbetrieb    TL    Normalbetrieb

t

OCT

Überkopplung detektiert

ON

OFF

Normalbetrieb    TT    Normalbetrieb

TD

Fig. 4

500    200 / 250 / 300 / 350

| NFC<br>Einheit<br><br>13.6MHz | CNFC1<br><br>LNFC<br><br>CNFC2 | Lx<br><br><br>Ly | L1<br>bzw.<br>L2 | Drahtlose Energ.<br>Übertr. Einheit<br><br>120... 135kHz |

Fig. 5

FSKLdatajam

aktiv FSKLdata1 FSKLdata2

inaktiv

COMready

ON

OFF

Tvalid Tbusy Tvalid Tbusy

Fig. 6a

253 / 353

601

Kom.
Detekt.

COMready

FSKLdata (parallel)

synch

603

Kom.
Trigger

COM

Kom.
Kontr.

ModSW Ausgang
FSKLdata (seriell)

602

Freq.
Teiler

COMclk

604

Fig. 6b

| Headerwert (hex) | Nachrichtenteil | Nachrichtenlänge (Bytes) | |
|---|---|---|---|
| 0x01 | Identifikationsnummer | 1 | —— 7a |
| 0x02 | Kommunikationsprotokoll-Identifikationsnummer | 1 | —— 7b |
| 0x03 | Leistungsklasse | 1 | —— 7c |
| 0x21 | Induktivitätswert (L2) / Windungszahl (L2) | 2 | —— 7d |
| 0x22 | Resonanzfrequenz / Bandbreite | 2 | —— 7e |
| 0x03 / 0x23 | Regeldifferenzwert | 1 / 2 | —— 7f |
| 0x06 | Bereitschaftsstatus / Kopplungsstatus / OCL Flag | 1 | —— 7g |
| 0x24 | Nichterlaubte Frequenz / Bandbreite der nichterlaubten Frequenz | 2 | —— 7h |

Fig. 7

Fig. 8

Fig. 9a

Fig. 9b

EP 3 402 063 A1

Fig. 10

Europäisches
Patentamt

European
Patent Office

Office européen
des brevets

## EUROPÄISCHER RECHERCHENBERICHT

Nummer der Anmeldung

EP 18 00 0534

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2012 239308 A (CENTRAL RES INST ELECTRIC POWER IND) 6. Dezember 2012 (2012-12-06) * Absatz [0006] - Absatz [0017]; Abbildungen 1,3 * * Absatz [0033] - Absatz [0048] * ----- | 1-15 | INV. H02M7/525 H02J5/00 H02M1/36 H04B5/00 H02M7/48 |
| X | WO 2009/091267 A2 (TELEMETRY RES LTD [NZ]; BUDGETT DAVID [NZ]) 23. Juli 2009 (2009-07-23) * Seite 10, Zeile 11 - Seite 15, Zeile 27; Abbildung 1, * ----- | 1-15 | |
| A | US 2012/043826 A1 (SAITOH YOSHIHIRO [JP]) 23. Februar 2012 (2012-02-23) * Absatz [0038]; Abbildung 1 * ----- | 1-15 | |
| A | US 2012/161529 A1 (KAMATA KOICHIRO [JP] ET AL) 28. Juni 2012 (2012-06-28) * Zusammenfassung; Abbildungen 1A, 1B * ----- | 1-15 | |
| A | US 2004/085145 A1 (DINN DON [CA] ET AL) 6. Mai 2004 (2004-05-06) * Zusammenfassung; Abbildung 1 * ----- | 1-15 | RECHERCHIERTE SACHGEBIETE (IPC) H02M H02J |

Der vorliegende Recherchenbericht wurde für alle Patentansprüche erstellt

| Recherchenort | Abschlußdatum der Recherche | Prüfer |
|---|---|---|
| München | 17. Juli 2018 | Kreutz, Joseph |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    .................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 00 0534

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2018

| Im Recherchenbericht angeführtes Patentdokument | Datum der Veröffentlichung | Mitglied(er) der Patentfamilie | Datum der Veröffentlichung |
|---|---|---|---|
| JP 2012239308 A | 06-12-2012 | JP 5794563 B2<br>JP 2012239308 A | 14-10-2015<br>06-12-2012 |
| WO 2009091267 A2 | 23-07-2009 | GB 2468990 A<br>NZ 565234 A<br>US 2011101790 A1<br>WO 2009091267 A2 | 29-09-2010<br>26-11-2010<br>05-05-2011<br>23-07-2009 |
| US 2012043826 A1 | 23-02-2012 | JP 5664015 B2<br>JP 2012044840 A<br>US 2012043826 A1 | 04-02-2015<br>01-03-2012<br>23-02-2012 |
| US 2012161529 A1 | 28-06-2012 | JP 5917900 B2<br>JP 6224155 B2<br>JP 2012147654 A<br>JP 2016174524 A<br>JP 2018033309 A<br>KR 20120071333 A<br>KR 20180041102 A<br>US 2012161529 A1<br>US 2015270723 A1<br>US 2018166885 A1 | 18-05-2016<br>01-11-2017<br>02-08-2012<br>29-09-2016<br>01-03-2018<br>02-07-2012<br>23-04-2018<br>28-06-2012<br>24-09-2015<br>14-06-2018 |
| US 2004085145 A1 | 06-05-2004 | KEINE | |

EPO FORM P0461

Für nähere Einzelheiten zu diesem Anhang : siehe Amtsblatt des Europäischen Patentamts, Nr.12/82